# EUROPÄISCHE PATENTSCHRIFT

(11) **EP 3 149 842 B1**
(45) Veröffentlichungstag und Bekanntmachung des Hinweises auf die Patenterteilung: **08.01.2020**
(21) Anmeldenummer: 15725998.7
(22) Anmeldetag: 26.05.2015
(51) Int. Cl.: H02M 1/32

(54) **VERFAHREN ZUR ANSTEUERUNG EINES MOTORS, FREQUENZUMRICHTER UND UMRICHTERMOTOR**
METHOD FOR CONTROLLING A MOTOR, FREQUENCY CONVERTER AND CONVERTER MOTOR
PROCÉDÉ DE COMMANDE D'UN MOTEUR, CONVERTISSEUR DE FRÉQUENCE ET MOTEUR À CONVERTISSEUR

(30) Priorität: 26.05.2014 DE 102014007593
(43) Veröffentlichungstag der Anmeldung: 05.04.2017
(73) Patentinhaber: Schneider Electric Industries SAS, 92500 Rueil-Malmaison (FR)
(72) Erfinder: LEIBL, Thomas, 77960 Seelbach (DE)
(74) Vertreter: Börjes-Pestalozza, Henrich
(86) Internationale Anmeldenummer: PCT/EP2015/001070
(87) Internationale Veröffentlichungsnummer: WO 2015/180835

(56) Entgegenhaltungen:
- DE-A1-102012 210 641
- DE-A1-102012 210 648
- US-A1- 2007 201 176
- US-A1- 2012 218 027
- US-A1- 2013 069 570

## Beschreibung

Die Erfindung betrifft ein Verfahren zur Ansteuerung eines Elektromotors, wobei Halbleiterschalter in einer Zuleitung des Elektromotors derart geschaltet werden, dass sich im über die Zuleitung bestromten Elektromotor ein gewünschter Stromvektor einstellt. Die Zuleitung kann hierbei zweiphasig, dreiphasig oder mit mehr als drei Phasen ausgebildet sein.

Die Erfindung betrifft weiter einen Frequenzumrichter mit einer Leistungsendstufe mit Halbleiterschaltern und einer Ansteuerungselektronik zur Schaltung der Halbleiterschalter.

Die Erfindung betrifft schließlich einen Umrichtermotor mit einem Elektromotor und einem diesen ansteuernden Frequenzumrichter.

Derartige Verfahren, Frequenzumrichter und Umrichtermotoren sind bekannt und werden beispielsweise eingesetzt, um in den Motorwicklungen ein elektromagnetisches Drehfeld gewünschter Drehfrequenz zu erzeugen. Dies geschieht beispielsweise durch Pulsweitenmodulation, die durch entsprechende Schaltung der Halbleiterschalter erzeugt wird. Die Halbleiterschalter bilden eine Leistungsendstufe des Frequenzumrichters.

Aus DE 10 2012 210 648 A1 und DE 10 2012 210 648 A1 sind ein Verfahren und eine Vorrichtung zum Ansteuern eines Wechselrichters bekannt, wobei ein Wechselrichter derart angesteuert wird, dass ein Stromraumzeiger mit einem Phasenwinkel bereitgestellt, der von einem Referenzphasenwinkel abweicht, wobei eine Abweichung des Phasenwinkels von dem Referenzphasenwinkel in Abhängigkeit einer Verlustleistung und/oder eine Temperatur wenigstens eines Schalters einer Mehrzahl von steuerbaren Schaltern bestimmt wird, wobei an einem Summationspunkt eine Differenz zwischen einer maximalen Temperatur einer oberen Seite und einer maximalen Temperatur einer unteren Seite ermittelt und in Abhängigkeit der Temperaturdifferenz ein geänderter Belastungssollwert bestimmt wird, um die Temperaturdifferenz entsprechend auszugleichen, wobei der Belastungssollwert reduziert wird, wenn die Temperaturdifferenz größer Null ist, und der Belastungssollwert erhöht wird, wenn die Temperaturdifferenz kleiner Null ist.

Aus US 2013/0069570 A1 ist eine PWM-Strategie zur Reduktion von lokalen Temperaturspitzen eines Umrichters und Gesamtverlusten bekannt, wobei das Auftreten eines hohen Stroms in einer einzelnen Phase verwendet wird, um eine Blockierung des Motors anzuzeigen und eine Überhitzung ohne Temperatursensoren zu erkennen.

Aus US 2012/0218027 A1 sind ein System und ein Verfahren zur Verbesserung der Leistungsverwaltung eines elektronischen Geräts bekannt, bei welchem ein Controller zum Empfang einer Temperaturmessung von einem Temperatursensor und zu einer Bestimmung einer Sperrschichttemperatur wenigstens eines IGBT eingerichtet ist.

Der Erfindung liegt die Aufgabe zugrunde, die Gebrauchseigenschaften eines Umrichtermotors zu verbessern.

Zur Lösung dieser Aufgabe sind erfindungsgemäß die Merkmale von Anspruch 1 vorgesehen. Insbesondere wird somit erfindungsgemäß zur Lösung der genannten Aufgabe bei einem Verfahren der eingangs beschriebenen Art vorgeschlagen, dass zumindest dann, wenn eine maximale thermische Belastung der Halbleiterschalter und/oder von den Halbleiterschaltern zugeordneten Halbleiterbauelementen einen Belastungs-Grenzwert übersteigt, ein Spannungspotential durch Schaltung der Halbleiterschalter derart verschoben wird, dass die maximale thermische Belastung verringert wird. Von Vorteil ist dabei, dass eine an den Halbleiterschaltern - beispielsweise an Transistoren - und/oder Halbleiterbauelementen, die den Halbleiterschaltern jeweils zugeordnet sind - beispielsweise an Freilaufdioden - anfallende Verlustleistung verringerbar ist. Hierdurch wird die Ausnutzung der Halbleiterschalter beispielsweise eines Umrichters erhöht. Ein Ausgangsstrom des Umrichters kann somit erhöht werden. Beispielsweise ist auf diese Weise eine Spannung über demjenigen Halbleiterschalter und/oder dem diesem Halbleiterschalter zugeordneten Halbleiterbauelement, der oder das die maximale thermische Belastung momentan aufweist, betragsmäßig verringerbar, sodass bei gleichbleibendem Motorstrom eine geringere Verlustleistung entsteht. Dies kann beispielsweise dadurch erreicht werden, dass die (effektiven) Spannungsdifferenzen zwischen den Phasen paarweise unverändert bleiben, indem die Ansteuerung der Halbleiterschalter geeignet verändert wird.

Alternativ oder zusätzlich können zur Lösung der genannten Aufgabe die Merkmale von Anspruch 2 erfindungsgemäß vorgesehen sein. Insbesondere wird somit in dieser Variante erfindungsgemäß bei einem Verfahren der eingangs beschriebenen Art vorgeschlagen, dass zumindest dann, wenn eine maximale thermische Belastung der Halbleiterschalter und/oder von den Halbleiterschaltern zugeordneten Halbleiterbauelementen einen Belastungs-Grenzwert übersteigt, eine Einschaltdauer wenigstens eines Halbleiterschalters der Halbleiterschalter derart verändert wird, dass die maximale thermische Belastung verringert wird. Dies kann beispielsweise durch eine Verringerung der Einschaltdauer des einzelnen Halbleiterschalters erfolgen. Auf diese Weise ist ein Puls-Pause-Verhältnis an dem momentan am stärksten thermisch belasteten Halbleiterschalter so veränderbar, dass die thermische Belastung reduziert wird, indem ein Strom über eine kürzere Zeitspanne fließt. Bevorzugt ist diese Ausgestaltung bei der zuvor beschriebenen Ausgestaltung vorgesehen.

Die Erfindung nutzt somit, dass eine thermische Belastung eines Halbleiterschalters oder eines zugehörigen Halbleiterbauelements wie einer Freilaufdiode in einer Leistungsendstufe bei gleichbleibendem Strom reduziert werden kann, indem ein Spannungspotential, beispielsweise ein reales oder rechnerisches Sternpunkt-Spannungspotential, geeignet verschoben und/oder eine Einschaltdauer geeignet verändert wird.

Das beschriebene Verfahren kann beispielsweise bei Motoren mit einer Sternschaltung oder einer Dreieckschaltung oder einer sonstigen Schaltung der Wicklungen eingesetzt werden. Beispielsweise kann das Spannungspotential als reales Sternpunkt-Spannungspotential oder als rechnerischer Vergleichswert vorliegen und veränderbar sein.

Die Bestimmung der maximalen thermischen Belastung kann auch durch Identifizierung desjenigen Halbleiterschalters und/oder desjenigen Halbleiterbauelements, an welchem eine thermische Belastung maximal ist, erfolgen.

Bei einer Ausgestaltung der Erfindung kann vorgesehen sein, dass die maximale thermische Belastung ermittelt wird. Von Vorteil ist dabei; dass eine Kenngröße über einen momentanen Betriebszustand bereitstellbar ist. Beispielsweise kann die maximale thermische Belastung gemessen werden. Alternativ kann vorgesehen sein, dass die maximale thermische Belastung berechnet wird, beispielsweise mit Hilfe eines thermischen Modells der Halbleiterschalter und/oder der Halbleiterbauelemente. Thermische Modelle zur Berechnung von thermischen Belastungen, insbesondere von Sperrschichttemperaturen, für Halbleiterschalter, insbesondere Transistoren, und/oder für Halbleiterbauelemente, insbesondere Halbleiterventile oder Freilaufdioden, sind an sich bekannt.

Bei einer Ausgestaltung der Erfindung kann vorgesehen sein, dass zu der maximalen thermischen Belastung ein Stellwert automatisch ermittelt wird, um welchen eine Einschaltdauer, beispielsweise die bereits erwähnte Einschaltdauer, wenigstens eines Halbleiterschalters, beispielsweise des bereits erwähnten wenigstens eines Halbleiterschalters, vermindert wird. Günstig ist es hierbei, wenn die Einschaltdauer eine Halbbrücke verändert wird, indem eine Einschaltdauer eines Halbleiterschalters der Halbbrücke in dem Maße erhöht wird, in welchem eine Einschaltdauer eines weiteren Halbleiterschalters der Halbbrücke vermindert wird. Besonders günstig ist es, wenn die Einschaltdauern von mehreren Halbbrücken derart verändert wird, dass sich eine über von den Halbbrücken angesteuerte Wicklungen abfallende Spannung nicht oder im Wesentlichen nicht - beispielsweise im Rahmen einer verfügbaren Mess- und/oder Stellgenauigkeit - ändert. Von Vorteil ist dabei, dass ein einfaches Mittel gegeben ist, mit welchem die thermische Belastung eines Halbleiterschalters beeinflussbar ist. Ferner ist ein einfaches Mittel gegeben, um ein Spannungspotential zu verschieben. Hierbei kann vorgesehen sein, dass zur Verringerung der thermischen Belastung die Einschaltdauer der Halbbrücke vermindert wird, wenn zuvor die Einschaltdauer einem Puls-Pause-Verhältnis von mehr als 50 % entsprach und/oder ein Strom durch die Halbbrücke positiv war. Umgekehrt kann vorgesehen sein, dass zur Verringerung der thermischen Belastung die Einschaltdauer der Halbbrücke erhöht wird, wenn die Einschaltdauer zuvor einem Puls-Pausen-Verhältnis von weniger als 50 % entsprach und/oder ein Strom durch die Halbbrücke negativ war. Vorteilhaft ist es allgemein, wenn die Verminderung oder Erhöhung der Einschaltdauer einer oder jeder Halbbrücke darauf begrenzt wird, dass kein Halbleiterschalter dauerhaft angesteuert wird. Besonders günstig ist es dabei, wenn ein verfügbarer Wertebereich der Einschaltdauer zwischen 5% und 95 %, bevorzugt zwischen 10% und 90%, liegt. Somit können dauerhaft leitende Zustände an den Halbleiterschaltern vermieden werden.

Es ist hierbei bekannt, die Halbleiterschalter einer Leistungsendstufe paarweise zu Halbbrücken zu gruppieren, wobei jeweils ein Halbleiterschalter eines Paares von Halbleiterschaltern mit einem ersten Spannungspotential einer Zwischenkreisspannung und der jeweils andere Halbleiterschalter des Paares mit einem zweiten Spannungspotential der Zwischenkreisspannung verbunden ist. Man bezeichnet in diesem Zusammenhang den erstgenannten Halbleiterschalter häufig als oberen Halbleiterschalter, den zweitgenannten Halbleiterschalter dagegen als unteren Halbleiterschalter. Die hier betrachteten Einschaltdauern einer Halbbrücke bezeichnen das Puls-Pausen-Verhältnis jeweils für den oberen Halbleiterschalter. Alternativ können auch Einschaltdauern verwendet werden, die auf den unteren Halbleiterschalter bezogen sind. Durch eine Verringerung der Einschaltdauer der Halbbrücke wird somit der obere Halbleiterschalter entlastet, während sich die Belastung des unteren Halbleiterschalters erhöht. Umgekehrt wird bei einer Erhöhung der Einschaltdauer der Halbbrücke der untere Halbleiterschalter entlastet, während sich die Belastung für den oberen Halbleiterschalter erhöht.

Bei einer Ausgestaltung der Erfindung kann vorgesehen sein, dass zur Ermittlung der maximalen thermischen Belastung für die Halbleiterschalter und/oder für die Halbleiterbauelemente je eine Sperrschichttemperatur ermittelt wird. Beispielsweise kann diese Sperrschichttemperatur gemessen oder aufgrund des bereits erwähnten thermischen Modells ermittelt werden. Von Vorteil ist dabei, dass eine unmittelbare Bezugsgröße für eine momentane thermische Belastung am Halbleiterschalter bereitsteht. Beispielsweise kann das thermische Modell in an sich bekannter Weise so eingerichtet sein, dass die Sperrschichttemperatur anhand einer momentanen Einschaltdauer und/oder eines momentan fließenden Stroms berechenbar ist.

Alternativ oder zusätzlich kann vorgesehen sein, dass zur Ermittlung der maximalen thermischen Belastung für die Halbleiterschalter je eine Einschaltdauer und/oder eine Stromstromstärke bestimmt wird/werden. Von Vorteil ist dabei, dass Berechnungsschritte insbesondere zur Berechnung einer Sperrschichttemperatur einsparbar sind, wenn die thermische Belastung direkt aus Einschaltdauer und/oder Stromstärke bestimmt wird.

Bei einer Ausgestaltung der Erfindung kann vorgesehen sein, dass zur Verschiebung eines Spannungspotentials, beispielsweise des bereits erwähnten Spannungspotentials, eine Einschaltdauer, beispielsweise die bereits erwähnte Einschaltdauer, wenigstens eines Halbleiterschalters der Halbleiterschalter verändert wird. Von Vorteil ist dabei, dass eine einfach handhabbare Verschiebung des Spannungspotentials erreichbar ist. Bevorzugt werden hierzu die Einschaltdauern für alle Halbleiterschalter der Leistungsendstufe verändert. Besonders bevorzugt werden hierzu die Einschaltdauern für alle Halbbrücken um einen einheitlichen Wert, beispielsweise den erwähnten Stellwert, verändert. Beispielsweise kann vorgesehen sein, dass die Einschaltdauer für obere Halbleiterschalter verringert wird. Auf diese Weise ist eine thermische Entlastung der oberen Halbleiterschalter erreichbar. Alternativ oder zusätzlich kann vorgesehen sein, dass die Einschaltdauer der Halbbrücke erhöht wird. Auf diese Weise ist eine thermische Belastung für untere Halbleiterschalter verringerbar.

Bei einer Ausgestaltung der Erfindung kann vorgesehen sein, dass eine Einschaltdauer, beispielsweise die bereits erwähnte Einschaltdauer, für einen Halbleiterschalter verringert wird, an welchem die maximale thermische Belastung auftritt. Von Vorteil ist dabei, dass die thermische Belastung zumindest an demjenigen Halbleiterschalter verringerbar ist, welcher die maximale thermische Belastung aufweist. Bevorzugt wird die Einschaltdauer für alle Halbbrücken gleichermaßen verringert bzw. erhöht, insbesondere um einen für alle Halbbrücken gleichen Wert.

Bei einer Ausgestaltung der Erfindung kann vorgesehen sein, dass ein Spannungspotential, beispielsweise das bereits erwähnte Spannungspotential, so verschoben wird, dass eine thermische Belastung eines zugeordneten Halbleiterbauelements, beispielsweise einer Freilaufdiode, das mit einem, beispielsweise dem bereits erwähnten, Halbleiterschalter mit der maximalen thermischen Belastung zusammenwirkt, unterhalb eines Grenzwerts bleibt. Das mit diesem Halbleiterschalter zusammenwirkende Halbleiterbauelement kann beispielsweise dadurch charakterisiert werden, dass ein Strom durch die Halbleiterbauelement fließt, wenn der Halbleiterschalter gesperrt wird. Von Vorteil ist dabei, dass eine übermäßige thermische Belastung des Halbleiterbauelements vermeidbar ist.

Alternativ oder zusätzlich kann vorgesehen sein, dass eine Einschaltdauer, beispielsweise die bereits erwähnte Einschaltdauer, so verändert wird, dass eine thermische Belastung eines Halbleiterbauelements, beispielsweise einer Freilaufdiode, die mit einem Halbleiterschalter, beispielsweise dem bereits erwähnten Halbleiterschalter mit der maximalen thermischen Belastung, zusammenwirkt, unterhalb eines Grenzwerts bleibt. Somit ist auch das zugeordnete Halbleiterbauelement, beispielsweise eine Freilaufdiode, thermisch entlastbar.

Bei einer Ausgestaltung der Erfindung kann vorgesehen sein, dass ein Bereich, über welchen ein Spannungspotential, beispielsweise das bereits erwähnte Spannungspotential, verschiebbar ist, dadurch begrenzt wird, dass eine kleinste oder größte zulässige Einschaltdauer für wenigstens einen Halbleiterschalter vorgegeben ist. Hierbei ist es günstig, wenn eine kleinste zulässige Einschaltdauer vorgegeben ist, wenn an einem oberen Halbleiterschalter die maximale thermische Belastung anliegt, während eine größte zulässige Einschaltdauer vorgegeben ist, wenn die maximale thermische Belastung an einem unteren Halbleiterschalter anliegt. Von Vorteil ist dabei, dass das zugehöre Halbleiterbauelement, beispielsweise die Freilaufdiode, auf einfache Weise gegen eine thermische Überlastung schützbar ist, da sich die thermische Belastung des zugehörigen Halbleiterbauelements erhöht, wenn die thermische Belastung eines Halbleiterschalters vermindert wird. Alternativ oder zusätzlich kann vorgesehen sein, dass ein Bereich, über welchen eine Einschaltdauer, beispielsweise die bereits erwähnte Einschaltdauer, veränderbar ist, in der beschriebenen Weise begrenzt wird.

Alternativ kann vorgesehen sein, dass die Veränderung des Spannungspotentials und/oder der Einschaltdauer durch das Maximum der thermischen Belastung der Halbleiterschalter und der thermischen Belastung der zugeordneten Halbleiterbauelemente bestimmt wird. Die erwähnten festen Werte für eine zulässige Einschaltdauer sind verzichtbar.

Bei einer Ausgestaltung der Erfindung kann daher vorgesehen sein, dass zur Ermittlung der maximalen thermischen Belastung ein Maximum einer thermischen Belastung des Halbleiterschalters und einer thermischen Belastung des zugeordneten Halbleiterbauelements gebildet wird.

Hierbei oder allgemein kann vorgesehen sein, dass zur Ermittlung der maximalen thermischen Belastung ein Maximum von thermischen Belastungen zu einzelnen Phasen und/oder Halbbrücken gebildet wird. Von Vorteil ist dabei, dass diejenige Halbbrücke identifizierbar ist, an welcher momentan die thermische Belastung am größten ist. Die thermischen Belastungen am Halbleiterschalter und am zugeordneten Halbleiterbauelement sind gemeinsam erfassbar. Zusätzliche Berechnungen, um den Einfluss auf eine thermische Belastung des zugeordneten Halbleiterbauelements zu erfassen oder abzuschätzen, sind verzichtbar. Es ist eine robuste Anordnung schaffbar.

Bei einer Ausgestaltung der Erfindung kann vorgesehen sein, dass ein Spannungspotential, beispielsweise das bereits erwähnte Spannungspotential, so verschoben wird, dass eine thermische Belastung des Halbleiterschalters und/oder des Halbleiterbauelements mit der maximalen thermische Belastung auf einen Belastungs-Grenzwert, beispielsweise den erwähnten Belastungs-Grenzwert, fällt. Von Vorteil ist dabei, dass eine einfach handhabbare Abhängigkeit gegeben ist, mit welcher beispielsweise ein minimal notwendiger Stellwert für eine Verminderung - insbesondere für obere Halbleiterschalter und/oder obere Halbleiterbauelemente - oder - insbesondere für untere Halbleiterschalter und/oder untere Halbleiterbauelemente - eine Erhöhung einer Einschaltdauer der Halbbrücke bereitstellbar ist.

Bei einer Ausgestaltung der Erfindung kann vorgesehen sein, dass zu der maximalen thermischen Belastung ein Stellwert automatisch ermittelt wird, um welchen eine Einschaltdauer, beispielsweise die bereits erwähnte Einschaltdauer, eines Halbleiterschalters und/oder Halbleiterbauelements , beispielsweise des wenigstens einen Halbleiterschalters und/oder des bereits erwähnten Halbleiterbauelements mit der maximalen thermischen Belastung vermindert oder - beispielsweise bezogen auf die Halbbrücke und in dem Fall, dass der Halbleiterschalter ein unterer Halbleiterschalter ist - erhöht wird. Von Vorteil ist dabei, dass eine automatische Berechnung der Größe der Verringerung der thermischen Belastung ausführbar ist.

Bei einer Ausgestaltung der Erfindung kann vorgesehen sein, dass ein Stellwert mit einem positiven Vorzeichen erzeugt wird, wenn der Halbleiterschalter oder ein einem Halbleiterschalter funktionell zugeordnetes Halbleiterbauelement mit der maximalen thermischen Belastung ein oberer Halbleiterschalter oder ein oberes Halbleiterbauelement ist. Von Vorteil ist dabei, dass eine Einschaltdauer durch Differenzbildung mit dem Stellwert verminderbar ist. Alternativ oder zusätzlich kann vorgesehen sein, dass ein Stellwert mit einem negativen Vorzeichen generiert wird, wenn die maximale thermische Belastung an einem unteren Halbleiterschalter oder ein einem Halbleiterschalter funktionell zugeordneten Halbleiterbauelement auftritt. Von Vorteil ist dabei, dass eine Einschaltdauer der Halbbrücke durch Differenzbildung mit dem Stellwert erhöhbar ist.

Bei einer Ausgestaltung der Erfindung kann vorgesehen sein, dass der Belastungs-Grenzwert durch eine Differenz zwischen einer maximal zulässigen Sperrschichttemperatur und einer Betriebstemperatur eines die Halbleiterschalter und/oder Halbleiterbauelemente kühlenden Kühlkörpers gegeben ist. Von Vorteil ist dabei, dass einfach sicherstellbar ist, dass die jeweils maximal zulässige Sperrschichttemperatur im Betrieb nicht überschritten wird.

Besonders günstig ist es, wenn es sich bei den Halbleiterschaltern um Transistoren, insbesondere um Leistungstransistoren, beispielsweise IGBT, also Bipolartransistoren mit isolierter Gate-Elektrode oder insulated-gate bipolar transistors, handelt. Bei derartigen Halbleiterschaltern fallen große elektrische Leistungen an, da vergleichsweise große Ströme und/oder Spannungen geschaltet werden.

Bevorzugt sind die zugeordneten Halbleiterbauelemente als Freilaufdioden oder als sonstige Halbleiterventile ausgebildet.

Das erfindungsgemäße Verfahren ist besonders vorteilhaft dann einsetzbar, wenn eine niedrige Drehzahl oder sogar ein Stillstand am angesteuerten Elektromotor eingestellt oder realisiert werden soll. Denn dann können an den Halbleiterschaltern und/oder den zugeordneten Halbleiterbauelementen vergleichsweise lange Zeitabschnitte auftreten, in welchen ein Strom über die Halbleiterschalter und/oder zugeordneten Halbleiterbauelemente durch die Motorwicklungen fließen soll. Durch die Bestimmung und gegebenenfalls Verringerung der thermischen Belastung der Halbleiterschalter und/oder zugeordneten Halbleiterbauelemente kann eine übermäßige thermische Belastung der Leistungsendstufe und/oder des angesteuerten Elektromotors in vielen Fällen vermieden werden.

Eine erfindungsgemäße Ausgestaltung kann daher vorsehen, dass das erfindungsgemäße verfahren aktiviert wird, wenn eine Drehzahl eines angesteuerten oder anzusteuernden Elektromotors unter einen vorgegebenen Drehzahl-Schwellwert fällt.

Bei einer vorteilhaften Ausgestaltung kann vorgesehen sein, dass eine maximale thermische Belastung, beispielsweise die bereits erwähnte maximale thermische Belastung, mit einem Belastungs-Grenzwert verglichen wird. Von Vorteil ist dabei, dass Zustände, in denen eine kritische thermische Belastung vorliegt, von Zuständen, in denen kein Eingreifen einer Regelung erforderlich ist, weil die thermische Belastung unkritisch ist, unterscheidbar sind. Somit sind Welligkeiten in den Stromverläufen reduzierbar, wenn die maximale thermische Belastung unterhalb des Belastungs-Grenzwerts liegt. Besonders günstig ist es dabei, wenn die maximale thermische Belastung an oberen Halbleiterschaltern, beispielsweise den bereits erwähnten oberen Halbleiterschaltern, mit dem Belastungs-Grenzwert verglichen wird. Somit sind unkritische Belastungszustände der oberen Halbleiterschalter erkennbar. Alternativ oder zusätzlich kann vorgesehen sein, dass die maximale thermische Belastung an unteren Halbleiterschaltern, beispielsweise den bereits erwähnten unteren Halbleiterschaltern, mit einem Belastungs-Grenzwert verglichen wird. Somit sind unkritische Belastungszustände der unteren Halbleiterschalter erkennbar. Bevorzugt werden die maximalen thermischen Belastungen an den oberen Halbleiterschaltern und an den unteren Halbleiterschaltern jeweils mit dem Belastungs-Grenzwert verglichen. Somit ist erkennbar, wenn insgesamt kein Eingreifen einer Regelung erforderlich ist, weil alle Halbleiterschalter eine unkritische thermische Belastung aufweisen.

Hierbei oder allgemein kann vorgesehen sein, dass eine maximale thermische Belastung, beispielsweise die bereits erwähnte maximale thermische Belastung, nur dann für die Verringerung der thermischen Belastung verwendet wird, wenn sie einen Belastungs-Grenzwert, beispielsweise den bereits erwähnten Belastungs-Grenzwert, übersteigt. Somit ist ein unnötiges Eingreifen in eine Ansteuerung der Halbleiterschalter vermeidbar.

Bei einer Ausgestaltung der Erfindung kann vorgesehen sein, dass eine Differenz zwischen einem einen Belastungs-Grenzwert übersteigenden Anteil einer an oberen Halbleiterschaltern, insbesondere den erwähnten oberen Halbleiterschaltern, vorliegenden maximalen thermischen Belastung einerseits und einem den oder einen Belastungs-Grenzwert übersteigenden Anteil einer an unteren Halbleiterschaltern, insbesondere den erwähnten unteren Halbleiterschaltern, vorliegenden maximalen thermischen Belastung andererseits gebildet wird. Somit ist eine Verringerung der thermischen Belastung an den oberen oder unteren Halbleitern, je nachdem, wo die größere thermische Belastung auftritt, erreichbar. Von Vorteil ist weiter, dass die Verringerung nur dann bewirkt wird, wenn wenigstens eine maximale thermische Belastung - unten oder oben - den Belastungs-Grenzwert übersteigt.

Bei einer Ausgestaltung der Erfindung kann vorgesehen sein, dass die Ansteuerung der Halbleiterschalter so gewählt wird, dass eine paarweise Spannungsdifferenz zwischen den einzelnen Phasen jeweils unverändert bleibt. Somit ist eine Verschiebung eines Spannungspunktes, beispielsweise des Sternpunktes, bei gleichbleibenden Motorströmen erreichbar.

Zur Lösung der genannten Aufgabe ist bei einem Frequenzumrichter der eingangs beschriebenen Art vorgesehen, dass die Ansteuerungselektronik zur Ausführung eines erfindungsgemäßen Verfahrens, beispielsweise wie zuvor beschrieben und/oder nach einem der auf ein Verfahren gerichteten Schutzansprüche, eingerichtet ist. Von Vorteil ist dabei, dass ein Frequenzumrichter mit verringerter thermischer Spitzenbelastung der Halbleiterschalter und/oder der diesen zugeordneten Halbleiterelemente bereitstellbar ist. Besonders günstig ist es, wenn die Ansteuerungselektronik Mittel zur Ausführung des erfindungsgemäßen Verfahrens aufweist. . Die Ansteuerungselektronik kann hierbei durch entsprechende Programmierung und/oder mit diskreten Bauelementen zur Ausführung des erfindungsgemäßen Verfahrens eingerichtet sein.

Bei einer Ausgestaltung der Erfindung kann vorgesehen sein, dass die Ansteuerungselektronik Verschiebemittel zum einstellbaren Verschieben eines Spannungspotentials, beispielsweise des bereits erwähnten Spannungspotentials, aufweist. Von Vorteil ist dabei, dass eine einfache Methode ausführbar ist, mit welcher eine elektrische Verlustleistung an einem Halbleiterschalter verringerbar ist.

Bei einer Ausgestaltung der Erfindung kann vorgesehen sein, dass die Ansteuerungselektronik wenigstens einen Differenzbilder zum Vergleich einer maximalen thermischen Belastung mit einem Belastungs-Grenzwert aufweist. Alternativ oder zusätzlich kann vorgesehen sein, dass die Ansteuerungselektronik wenigstens ein Sättigungsglied aufweist, bevorzugt in einer Signalflussrichtung hinter dem erwähnten Differenzbilder. Somit sind negative Differenzen, die ein Unterschreiten des Belastungs-Grenzwerts und somit eine unkritische maximale thermische Belastung anzeigen, in einer weiteren Bearbeitung ausblendbar sind. Bevorzugt schneidet das Sättigungsglied jeweils negative Werte ab.

Bei einer Ausgestaltung der Erfindung kann vorgesehen sein, dass die Ansteuerungselektronik Belastungs-Bestimmungsmittel zur Ermittlung einer thermischen Belastung für jeden Halbleiterschalter und/oder jedes zugeordnete Halbleiterbauelement, beispielsweise der bereits erwähnten thermischen Belastung, aufweist. Von Vorteil ist dabei, dass die maximale thermische Belastung, beispielsweise durch Maximalwertbildung für die ermittelten thermischen Belastungen, einfach ermittelbar ist.

Bei einer Ausgestaltung der Erfindung kann vorgesehen sein, dass die Ansteuerungselektronik Sperrschichttemperatur-Bestimmungsmittel zur Ermittlung einer Sperrschichttemperatur, beispielsweise der bereits erwähnten Sperrschichttemperatur, wenigstens eines Halbleiterschalter aufweist. Bevorzugt ist die jeweilige Sperrschichttemperatur für jeden Halbleiterschalter und/oder jedes Halbleiterbauelement ermittelbar. Durch Maximalwertbildung ist somit derjenige Halbleiterschalter und/oder jedes Halbleiterbauelement, welcher oder welches momentan die maximale Sperrschichttemperatur und daher die maximale thermische Belastung aufweist, ermittelbar. Dies kann beispielsweise durch direktes Messen geschehen. Besonders günstig ist es jedoch, wenn die Ermittlung der Sperrschichttemperatur mit Hilfe eines thermischen Modells beispielsweise aufgrund von Strömen und/oder Einschaltdauern erfolgt, da direkte Temperatursensoren schwierig in Halbleiterschaltern oder Halbleiterbauelementen zu implementieren sind.

Bei einer Ausgestaltung der Erfindung kann vorgesehen sein, dass die Ansteuerungselektronik zur Veränderung einer Einschaltdauer, beispielsweise der bereits erwähnten Einschaltdauer, für wenigstens einen oder jeden Halbleiterschalter eingerichtet ist. Von Vorteil ist dabei, dass eine thermische Belastung am Halbleiterschalter einfach beeinflussbar und/oder einstellbar ist. Besonders günstig ist es dabei, wenn die Ansteuerungselektronik zur Veränderung einer Einschaltdauer, beispielsweise der bereits erwähnten Einschaltdauer, für wenigstens einen oder jeden Halbleiterschalter insbesondere derart, dass eine paarweise Spannungsdifferenz zwischen den einzelnen Phasen jeweils unverändert bleibt, eingerichtet ist. Von Vorteil ist dabei, dass trotz Verringerung der thermischen Belastung ein gleichbleibender, zeitlich konstanter Motorstrom einstellbar ist.

Bei einer Ausgestaltung der Erfindung kann vorgesehen sein, dass die Ansteuerungselektronik Prüfmittel zu einer Prüfung, ob eine Einschaltdauer kleiner als ein Vorgabewert ist, aufweist. Von Vorteil ist dabei, dass bei einer Reduktion der Einschaltdauer vermeidbar ist, dass an einem zugehörigen Halbleiterbauelement, beispielsweise einer Freilaufdiode, eine übermäßige thermische Belastung auftritt.

Umgekehrt kann zusätzlich oder alternativ vorgesehen sein, dass die Ansteuerungselektronik Prüfmittel aufweist, die zu einer Prüfung, ob eine Einschaltdauer größer als ein Vorgabewert ist, eingerichtet sind. Es ist somit ein anderes oder zweites Kriterium prüfbar. Von Vorteil ist dabei, dass bei einer Erhöhung der Einschaltdauer vermeidbar ist, dass ein zugehöriges Halbleiterbauelement, beispielsweise eine Freilaufdiode, übermäßig thermisch belastet wird. Die Entscheidung, welches der beiden genannten Kriterien zu prüfen ist, kann beispielsweise durch ein Vorzeichen des bereits erwähnten Stellwerts gegeben sein. So kann beispielsweise bei einem positiven Stellwert die Prüfung auf ein Unterschreiten des Vorgabewertes und bei einem negativen Stellwert die Prüfung auf ein Überschreiten des Vorgabewertes ausgelöst werden oder sein. Bevorzugt ist der Vorgabewert eine Einschaltdauer, die einem Pulsen-Pausen-Verhältnis von 50 % entspricht.

Die Erfindung wird nun anhand von einem Ausführungsbeispiel näher beschrieben, ist jedoch nicht auf dieses Ausführungsbeispiel beschränkt. Weitere Ausführungsbeispiele ergeben sich durch Kombination der Merkmale einzelner oder mehrerer Schutzansprüche untereinander und/oder mit einzelnen oder mehreren Merkmalen des Ausführungsbeispiels.

Es zeigt
- Fig. 1: ein Blockschaltbild eines erfindungsgemäßen Umrichtermotors,
- Fig. 2: ein Blockschaltbild einer Stellwert-Bestimmungseinrichtung des Umrichtermotors gemäß Figur 1,
- Fig. 3: ein Blockschaltbild einer Modulationseinrichtung des Umrichtermotors gemäß Fig. 1,
- Fig. 4: ein Blockschaltbild einer Begrenzungseinrichtung der Modulationseinrichtung gemäß Fig. 3,
- Fig. 5: eine Leistungsendstufe des Umrichtermotors gemäß Fig. 1,
- Fig. 6: eine Phasenspannung und eine thermische Belastung in der zugehörigen Phase bei einem erfindungsgemäßen Verfahren,
- Fig. 7: die Situation gemäß Fig. 6, wenn die thermische Belastung geringer ist,
- Fig. 8: die zu Fig. 7 gehörige Verschiebung des Spannungspotentials in der Phase,
- Fig. 9: ein Blockschaltbild eines weiteren erfindungsgemäßen Ausführungsbeispiels und

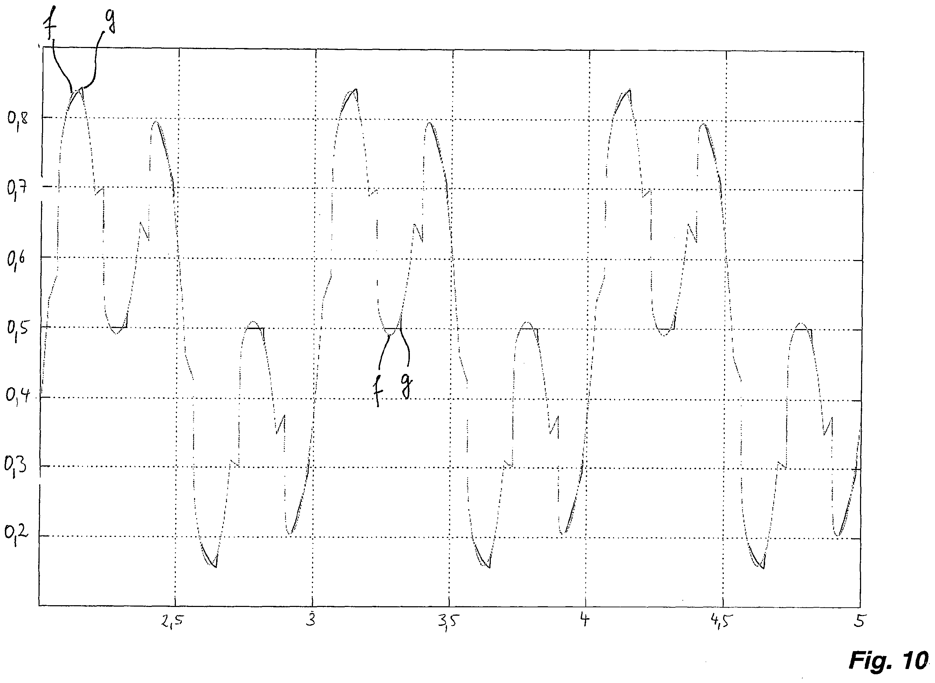

- Fig. 10: eine Phasenspannung und eine thermische Belastung in der zugehörigen Phase bei einem erfindungsgemäßen Verfahren bei dem Ausführungsbeispiel nach Fig. 9.

Im Folgenden werden die Figuren gemeinsam beschrieben.

Fig.l zeigt ein Blockschaltbild eines im Ganzen mit 1 bezeichneten Umrichtermotors.

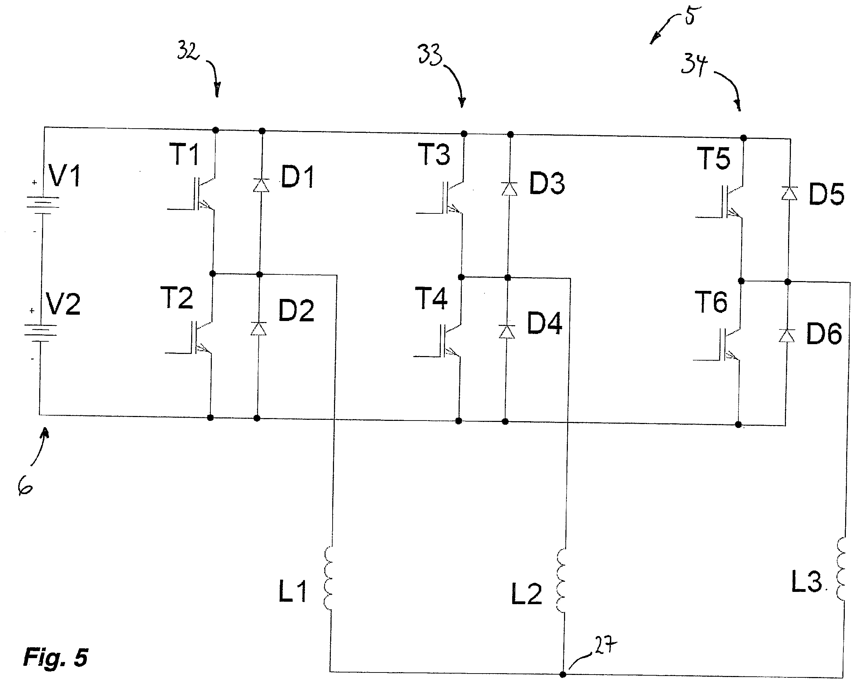

Der Umrichtermotor 1 hat in an sich bekannter Weise einen Elektromotor 2, an welchem die Phasenspannungen U_sa, U_sb und U_sc anlegt werden, damit in den Wicklungen L1, L2 und L3 (vergleiche Fig. 5) Ströme I_U, I_V und I_W fließen.

Hierzu wird der Elektromotor 2 über eine im Beispiel dreiphasige Zuleitung 3 durch einen Frequenzumrichter 4 in an sich bekannter Weise angesteuert. Die Zuleitung 3 kann - beispielsweise bei Schrittmotoren - auch mehr als drei Phasen oder - beispielsweise bei DC-Motoren - weniger als drei Phasen aufweisen.

Fig. 5 zeigt einen stark schematisierten Schaltplan der im Ganzen mit 5 bezeichneten Leistungsendstufe des Frequenzumrichters 4.

Die Leistungsendstufe 5 weist Halbleiterschalter T1, T2, T3, T4, T5 und T6 (hier beispielhaft Leistungstransistoren) auf, mit welchen die Motorwicklungen L1, L2 und L3 bestrombar sind.

Den Halbleiterschaltern T1 bis T6 sind Halbleiterbauelemente D1, D2, D3, D4, D5 und D6 (hier beispielhaft Freilaufdioden) zugeordnet. Hierbei ist beispielsweise das Halbleiterbauelement D2 dem Halbleiterschalter T1 zugeordnet, was bedeutet, dass ein Strom durch das Halbleiterbauelement D2 fließt, wenn der Halbleiterschalter D1 gerade abgeschaltet wurde. Die Halbleiterschalter T1, T2 definieren die Halbbrücke 32, die Halbleiterschalter T3, T4 definieren die Halbbrücke 33 und die Halbleiterschalter T5, T6 definieren die Halbbrücke 34. Zu diesen gehören jeweils die zugeordneten Halbleiterbauelemente D1, D2, D3, D4, D5, D6.

Die Leistungsendstufe 5 ist aus dem Zwischenkreis 6 gespeist, in welchem die Zwischenkreisspannung V1 + V2 anliegt.

Die Halbleiterschalter T1 bis T6 können in die Gruppe der oberen Halbleiterschalter T1, T3 und T5, die mit dem Plus-Spannungspotential der Zwischenkreisspannung verbunden sind, und die Gruppe der unteren Halbleiterschalter T2, T4 und T6, die mit dem negativen Spannungspotential der Zwischenkreisspannung verbunden sind, unterteilt werden. Jeweils ein oberer Halbleiterschalter T1, T3 und T5 bildet mit je einem unteren Halbleiterschalter T2, T4, T6 eine Halbbrücke in Form eines Paars von Halbleiterschalter, die gemeinsam jeweils eine Motorwicklung L1, L2 bzw. L3 schalten.

Der Frequenzumrichter 4 hat eine Ansteuerungselektronik 7, mit welcher die Wicklungsspannungen U_sa, U_sb und U_sc bereitstellbar sind.

Die Ansteuerungselektronik 7 hat eine Modulationseinrichtung 8, mit welcher die Pulsweitenmodulation (PWM) für die Zuleitung 3 erzeugbar ist.

Die Pulsweitenmodulation ist in an sich bekannter Weise durch Einschaltdauern (duty cycles) charakterisiert. In den Figuren bezeichnen DC_U, DC_V und DC_W die Einschaltdauern der einzelnen Phasen in an sich bekannter Weise.

Die Einschaltdauern werden häufig in % angegeben, wodurch das Puls-Pause-Verhältnis für den jeweiligen oberen Halbleiterschalter T1, T3 bzw. T5 der Paare (T1, T2) (T3, T4) oder (T5, T6) oder Halbbrücken 32, 33, 34 festgelegt ist.

Die Ansteuerungselektronik 7 des Frequenzumrichters 4 weist ferner eine Stellwert-Bestimmungseinrichtung 9 auf, mit welcher ein Stellwert DC_lim automatisch ermittelt wird.

Hierzu ist in der Stellwerk-Bestimmungseinrichtung 9 ein Sperrschichttemperatur-Bestimmungsmittel 10 ausgebildet, mit welchem anhand der Motorströme I_U, I_V und I_W sowie der zugehörigen Einschaltdauern DC_U, DC_V und DC_W für jeden Halbleiterschalter T1 bis T6 jeweils eine Sperrschichttemperatur ermittelbar ist. Hierzu greift das Sperrschichttemperatur-Bestimmungsmittel 10 auf ein Halbleiterschalter-Modell - hier als Transistor-Modell - der Halbleiterschalter T1 bis T6 zurück.

Aus den ermittelten Sperrschichttemperaturen kann eine thermische Belastung für jeden Halbleiterschalter T1 bis T6 berechnet werden. Hierzu sind in der Ansteuerungselektronik 7 Belastungs-Bestimmungsmittel 11 ausgebildet, welche die Sperrschichttemperatur-Bestimmungsmittel 10 umfassen können.

Die Sperrschichttemperatur-Bestimmungsmittel 10 können in weiteren Ausführungsbeispielen Temperatursensoren umfassen und die Sperrschichttemperaturen direkt an den Halbleiterschalter T1 bis T6 messen.

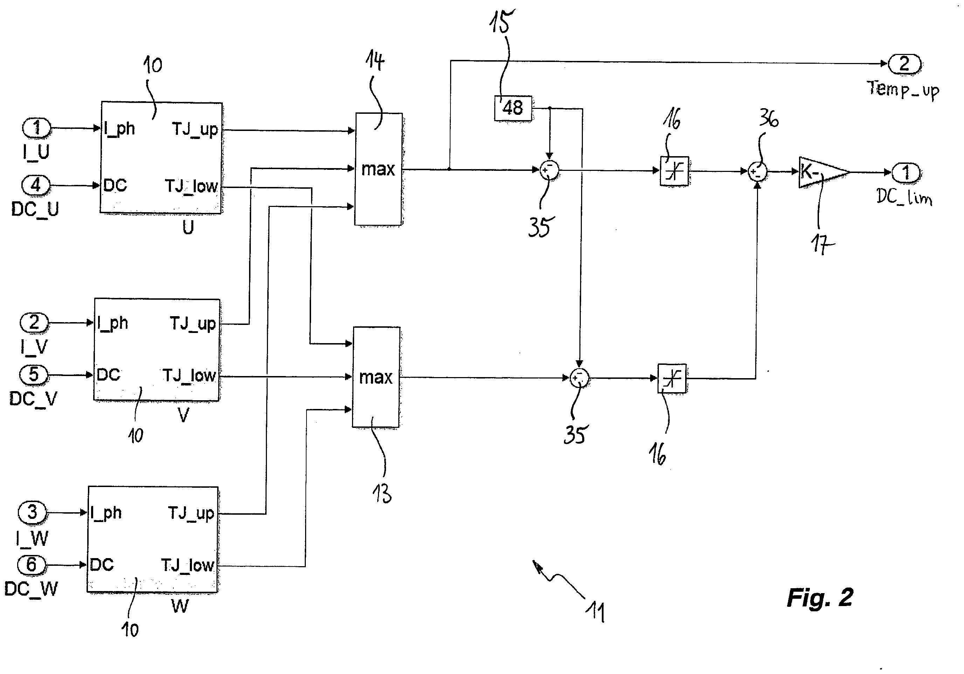

Fig. 2 zeigt in einer stark vereinfachten Prinzipdarstellung den Aufbau und die Funktionsweise des Belastungs-Bestimmungsmittels 11.

Es ist ersichtlich, dass die drei Phasen U, V, W separat voneinander bearbeitet werden. Jeder dieser Phasen U, V und W ist ein Sperrschichttemperatur-Bestimmungsmittel 10 zugeordnet, welches in an sich bekannter Weise zur Berechnung von einer Sperrschichttemperatur TJ_up für den jeweiligen oberen Halbleiterschalter T1, T3 oder T5 und von einer Sperrschichttemperatur TJ_low für den jeweiligen unteren Halbleiterschalter T2, T4 oder T6 aus den jeweiligen Motorströmen I_U, I_V und I_W und den Motorspannungen DC_U, DC_V und DC_W eingerichtet ist.

Die Sperrschichttemperaturen TJ_low der jeweiligen unteren Halbleiterschalter werden einem Maximalwertbilder 13 zugeführt. Die Sperrschichttemperaturen TJ_up zu den jeweiligen oberen Halbleiterschalter T1, T3 und T5 werden einem zweiten Maximalwertbilder 14 zugeführt. Die Maximalwertbilder 13, 14 ermitteln jeweils unter den drei zugeführten Sperrschichttemperaturen TJ_low beziehungsweise TJ_up den Maximalwert und somit die maximale thermische Belastung in den Halbleiterschaltergruppen.

Die jeweils maximale Sperrschichttemperatur wird mit einem fest hinterlegten Belastungs-Grenzwert 15 verglichen. Dies erfolgt mit einem Differenzbilder 35. Im Beispiel gemäß Fig. 2 ist dieser Belastungs-Grenzwert 15 beispielhaft auf 48°C festgelegt. Bei weiteren Ausführungsbeispielen sind andere Belastungs-Grenzwerte 15 verwendbar.

In Sättigungsgliedern 16 werden nur positive Werte des Vergleichs mit dem Belastungs-Grenzwert 15 durchgelassen, die anschließend in einem Differenzbilder 36 subtrahiert und einem Verstärker 17 zugeführt werden. Dieser Verstärker 17 stellt den Stellwert DC_lim bereit. Die Sättigungsglieder 16 lassen somit einen Beitrag der maximalen thermischen Belastungen der oberen Halbleiterschalter T1, T3, T5 beziehungsweise der unteren Halbleiterschalter T2, T4, T6 zu dem Stellwert DC_lim nur dann zu, wenn die jeweilige maximale thermische Belastung den Belastungs-Grenzwert übersteigt.

Hinter den beiden Sättigungsgliedern 16 liegt somit der den Belastungs-Grenzwert 15 übersteigende Anteil der an den oberen Halbleiterschaltern T1, T3, T5 bzw. der an den unteren Halbleiterschaltern T2, T4, T6 vorliegenden maximalen thermischen Belastung an. Anschließend wird die Differenz dieser Anteile im Differenzbilder 36 gebildet und dem Verstärker 17 zugeführt. Die Veränderung des Stellwertes DC_lim wird somit durch diese übersteigenden Anteile bestimmt.

An der mit einer Ziffer "2" ("Temp_up") bezeichneten Stelle können die Sperrschichttemperaturen an den oberen Halbleiterschalter T1, T2 und T3 direkt abgegriffen werden. Ein ähnlicher Abgriff kann für die Sperrschichttemperaturen der unteren Halbleiterschalter T2, T4 und T5 eingerichtet sein.

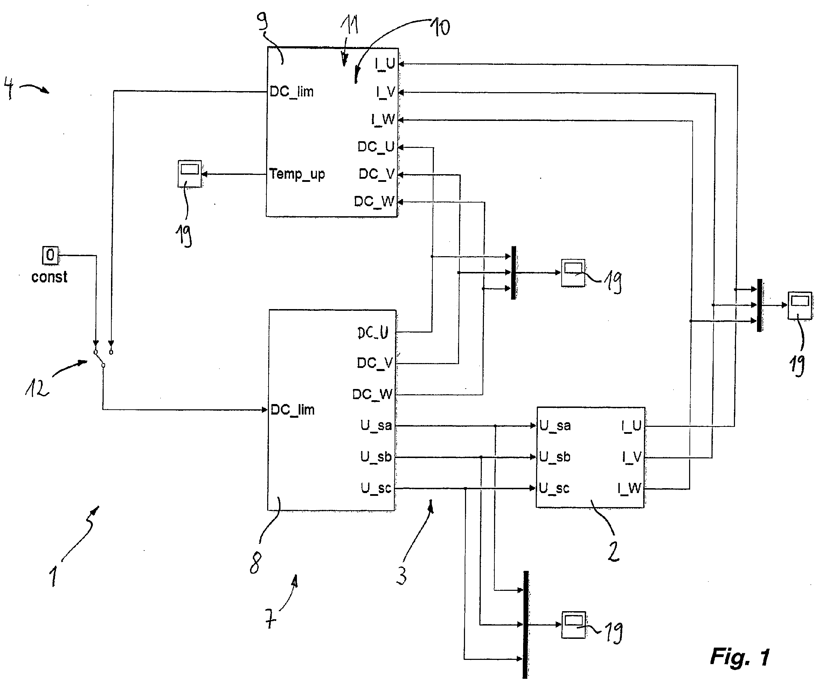

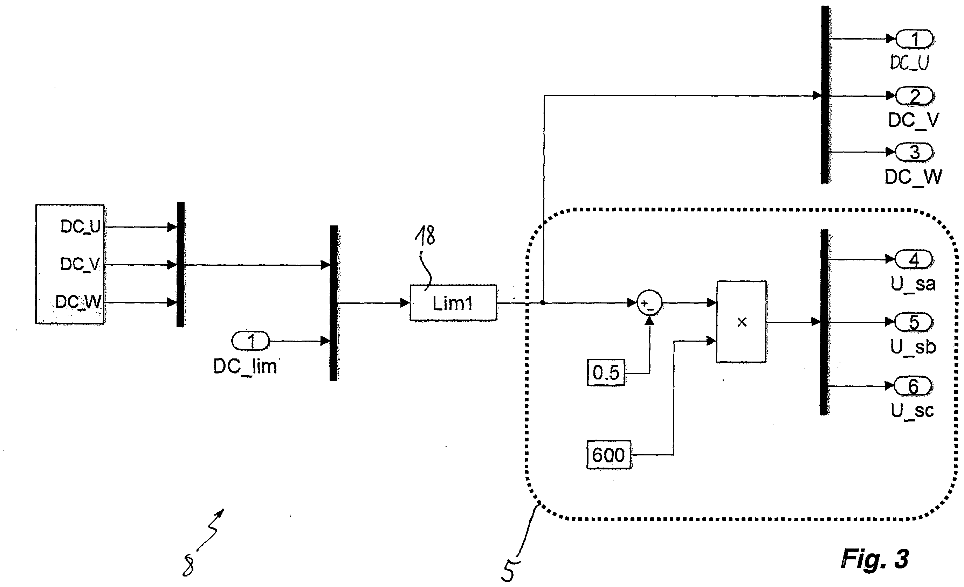

Wird der Schalter 12 in Fig. 1 umgeschaltet, so wird der bereitgestellte Stellwert DC_lim der Modulationseinrichtung 8 zugeführt, welcher in einer Prinzipskizze in Fig. 3 näher gezeigt ist.

Der Modulationseinrichtung 8 werden die Höhe der Phasenspannungen DC_U, DC_V und DC_W sowie der Stellwert DC_lim zugeführt.

In einer Begrenzungseinrichtung 18 werden die dreikomponentige Phasenspannungen entsprechend dem Stellwert DC_lim verändert. Dies geschieht im beschriebenen Beispiel durch eine Veränderung der Einschaltdauer.

Die Spannungssignale werden anschließend der Leistungsendstufe 5 zugeführt, in welcher die Einschaltdauern durch Ansteuerung der Halbleiterschalter T1 bis T6 in an sich bekannter Weise in Wicklungsspannungen U_sa, U_sb und U_sc umgesetzt werden. Dies ist in Fig. 3 symbolisch durch eine Subtraktion eines konstanten Zahlenwertes, um aus den Einschaltdauern Signale zu erhalten, die symmetrisch um den Nullpunkt liegen, und durch eine Multiplikation mit einem Spannungswert (hier 600 Volt) verdeutlicht.

Die Einschaltdauern DC_U, DC_V und DC_W können zuvor abgegriffen und an einem Ausgabemittel 19 ausgegeben, beispielsweise angezeigt, werden. In gleicher Weise können die Motorströme I_U, I_V und I_W, die Motorspannungen U_sa, U_sb und U_sc sowie die maximale Sperrschichttemperatur an den oberen Transistoren Temp_up an jeweiligen Ausgabemitteln 19 ausgegeben werden.

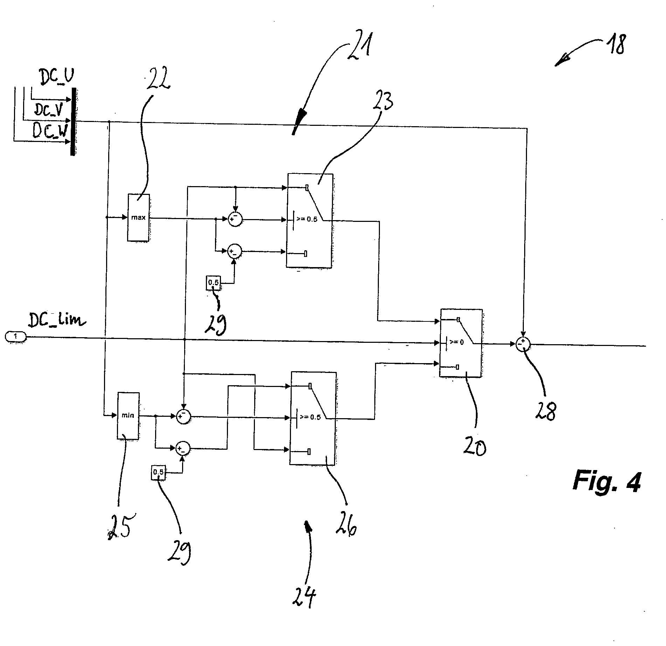

Fig. 4 zeigt in einer Prinzipdarstellung den logischen Signalfluss in der Begrenzungseinrichtung 18 gemäß Fig. 3.

Der Begrenzungseinrichtung 18 werden die Einschaltdauern DC_U, DC_V und DC_W sowie - am Eingang "1" - der Stellwert DC_lim zugeführt.

In einer Verzweigungseinrichtung 20 wird zunächst geprüft, ob der Stellwert DC_lim positiv oder negativ ist.

Fig. 4 zeigt die Schaltstellung der Verzweigungseinrichtung 20, wenn der Stellwert DC_lim positiv ist. Die untere Schaltstellung in der symbolischen Verzweigungseinrichtung 20 entspricht dem Fall, dass der Stellwert DC_lim negativ ist.

Ist der Stellwert DC_lim positiv, so wird in einem Prüfmittel 21 geprüft, ob das Maximum der Einschaltdauern DC_U, DC_V und DC_W um mehr als einen Vorgabewert 29 von 0,5 von dem Stellwert DC_lim abweicht. Hierzu wird in einem Maximalwertbilder 22 das Maximum der Einschaltdauern DC_U, DC_V und DC_W ermittelt.

Ist dies der Fall, so gilt in der Verzweigungseinrichtung 23 die gezeigte Schaltstellung, und es werden die drei Einschalterdauern DC_U, DC_V und DC_W mit dem Verschiebemittel 28 jeweils um den Stellwert DC_lim vermindert, wobei das Resultat dieser Operation ausgegeben wird. Durch die Prüfung des ersten Kriteriums ist sichergestellt, dass das Maximum der Einschaltdauern DC_U, DC_V und DC_W nach Subtraktion von DC_lim nicht unter den Vorgabewert von 0,5 fällt.

Ist das genannte Kriterium nicht erfüllt, so wechselt die Verzweigungseinrichtung 23 in die andere Schaltstellung, und es werden die Einschaltdauern DC_U, DC_V und DC_W mit dem Verschiebemittel 28 jeweils um die Differenz zwischen der maximalen Einschaltdauer aus dem Maximalwertbilder 22 und dem Vorgabewert 29 vermindert. Das Resultat dieser Operation wird in diesem Fall ausgegeben. Im Beispiel beträgt der Vorgabewert 29 0,5.

In analoger Weise vollzieht sich die Verarbeitung, wenn sich ergibt, dass der Stellwert DC_lim negativ ist, wobei die Verzweigungseinheit 20 in die andere Schaltstellung gegenüber Fig. 4 wechselt.

Dann wird in einem Prüfmittel 24 in analoger Weise zu dem Prüfmittel 21 verfahren, wobei statt des Maximalwertbilders 22 nun ein Minimalwertbilder 25 vorgesehen ist, welcher die Verzweigungseinrichtung 26 in der beschriebenen Weise ansteuert. Das Prüfmittel 24 prüft nun als ein zweites Kriterium, ob die Differenz zwischen dem Maximum der Einschaltdauern DC_U, DC_V und DC_W und dem Stellwert DC_lim größer als 0,5 ist. Ist dies der Fall, wird der Stellwert DC_lim mit dem Verschiebemittel 28 von den Einschaltdauern DC_U, DC_V und DC_W subtrahiert. Andernfalls wird die Differenz zwischen dem Maximalwert der Einschaltdauern DC_U, DC_V und DC_W und Vorgabewert 29 mit dem Verschiebemittel 28 von den Einschaltdauern DC_U, DC_V und DC_W subtrahiert.

Der Plan gemäß Fig. 4 setzt somit die folgende Matlab-Funktion "Lim1" um:

```
     Lim: Signal DC_limit
     DC: 3komponentiger Vektor mit der Einschaltdauer (duty
          cycle) für alle drei Phasen
     max(DC): Maximum aller 3 eingegebenen Einschaltdauern
     min(DC): Minimum aller 3 eingegebenen Einschaltdauern
     if Lim > 0
          if ((max(DC)-Lim) < 0.5)
              Lim = max(DC) - 0.5;
         end
         DC = DC - Lim;
     end
     if Lim < 0
          Lim = -Lim;
          if ((min(DC) + Lim) > 0.5)
              Lim = 0.5 - min(DC);
          end
          DC = DC + Lim;
     end
```

Diese Begrenzung vermeidet eine zu starke Belastung des zugehörigen Halbleiterbauelements D1 bis D6, also im Beispiel der zugehörigen Freilaufdiode, die sich bei einer Unterschreitung eines Wertes von 0.5 für einer Einschaltdauer meistens ergibt, wenn die beschriebene Verschiebung des Spannungspotentials nur anhand der Temperatur der Halbleiterschalter T1 bis T6 erfolgt.

Mit dem erfindungsgemäßen Frequenzumrichter 1 ist nun das folgende erfindungsgemäße Verfahren ausführbar.

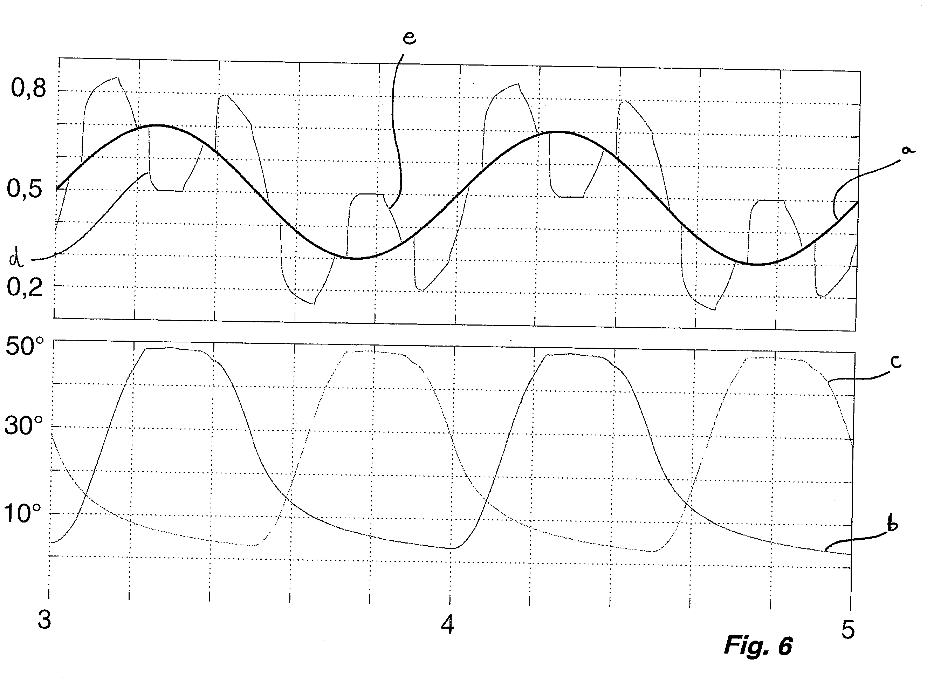

Wenn der Schalter 12 in der in Fig. 1 dargestellten deaktivierten Schaltstellung ist, bleibt die Motorspannung unbeeinflusst und hat den in Fig. 6 oberes Diagramm dargestellten sinusförmigen Verlauf a. Dargestellt ist für eine Phase der zeitliche Verlauf der Einschaltdauer DC_U.

Die übrigen Phasen haben einen entsprechenden Verlauf.

Wird der Schalter 12 in die andere, aktivierte Schaltstellung überprüft, so wird das erfindungsgemäße Verfahren aktiviert.

Die untere Hälfte von Fig. 6 zeigt den Verlauf der Sperrschichtentemperatur für die Halbleiterschalter T1 und T2 der Phase U. Die übrigen Phasen haben einen entsprechenden, zeitversetzten Verlauf.

Dargestellt ist als Verlauf b der zeitliche Verlauf der Sperrschichttemperatur an dem oberen Halbleiterschalter T1. Der Verlauf c zeigt den zeitlichen Verlauf der Sperrschichttemperatur an dem unteren Halbleiterschalter T2.

Es ist ersichtlich, dass die Halbleiterschalter in bestimmten Zeitabschnitten einen Sperrschichttemperaturwert von 48° erreichen.

Die Phasen U, V und W sind bekanntermaßen 120° gegeneinander versetzt. Dies gilt auch für die zugehörigen Sperrschichttemperaturen. Daher ist in den Zeitabschnitten, in denen die Sperrschichttemperatur der Halbleiterschalter T1 bzw. T2 nahe dem Belastungs-Grenzwert 15 ist, der jeweilige Sperrschichttemperaturwert das Maximum unter den Sperrschichttemperaturwerten der Halbleiterschalter T1 bis T6.

Aus Fig. 2 ist ersichtlich, dass bei Erreichung des Belastungs-Grenzwerts 15 durch die Sperrschichttemperatur ein Stellwert DC_lim generiert wird.

Der generierte Stellwert DC_lim bewirkt nach dem Schaltplan gemäß Fig. 4 eine Veränderung der Einschaltdauern DC_U, DC_V und DC_W um einen einheitlichen Wert für alle Phasen U, V und W. Je nach Vorzeichen des Stellwerts DC_lim wird eine Erhöhung oder Verringerung bewertet. Hierzu wird in einem Verschiebemittel 28 das Spannungspotential verschoben, indem die Einschaltdauern DC_U, DC_V und DC_W additiv oder subtraktiv verändert werden.

Die Verringerung der Einschaltdauer DC_U hat einen Spannungsabfall in der zugehörigen Wicklungsspannung zur Folge, wie an der Kurve d in Fig. 6 ersichtlich ist.

Sobald die beschrieben Situation für den unteren Transistor T2 vorliegt, ergibt sich eine Erhöhung der Einschaltdauer DC_U gemäß der Kurve e.

Die übrigen Abweichungen von dem sinusförmigen Verlauf a gehen auf die übrigen Halbleiterschalter T3 bis T6 zurück.

Aus dem Schaltbild gemäß Fig. 5 ist ersichtlich, dass eine Verschiebung der Einschaltdauer DC_U zugunsten des Halbleiterschalters T2, um den Halbleiterschalter T1 zu entlasten, zu einer Verschiebung des Spannungspotentials des Sternpunkt 27 an der Motorwicklung L1 führt. Dieses Sternpunkt-Spannungspotential stellt ein Beispiel für das erfindungsgemäß veränderte Spannungspotential dar.

Diese Verschiebung zeigt, dass die Ansteuerung der Halbleiterschalter T1, T2, T3, T4, T5, T6 so gewählt wird, dass eine paarweise Spannungsdifferenz zwischen den einzelnen Phasen jeweils unverändert bleibt. Da die Motorströme I_U, I_V, I_W durch diese Spannungsdifferenzen festgelegt sind, bleiben sie hierbei gleich.

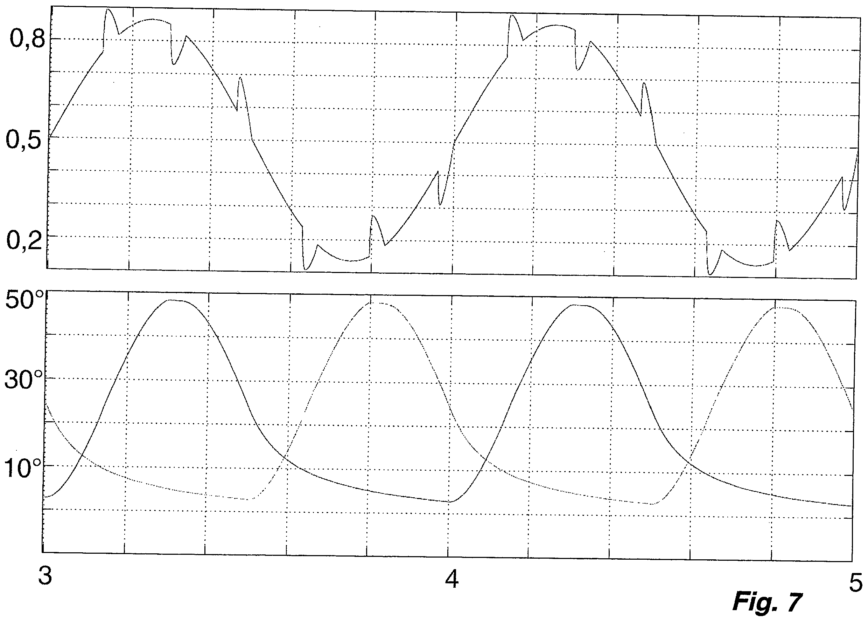

Fig. 7 zeigt den zeitlichen Verlauf des Sternpunkt-Spannungspotentials für die Phase U.

Deutlich sind die Absenkungen des Sternpunkt-Spannungspotentials zur Zeit 3.3 ersichtlich, welche durch das Erreichen des Belastungs-Grenzwerts 15 für die Sperrschichttemperatur an dem oberen Halbleiterschalter T1 bewirkt sind. Die übrigen Ausschläge gehören zu den übrigen Halbleiterschaltern T2 bis T6.

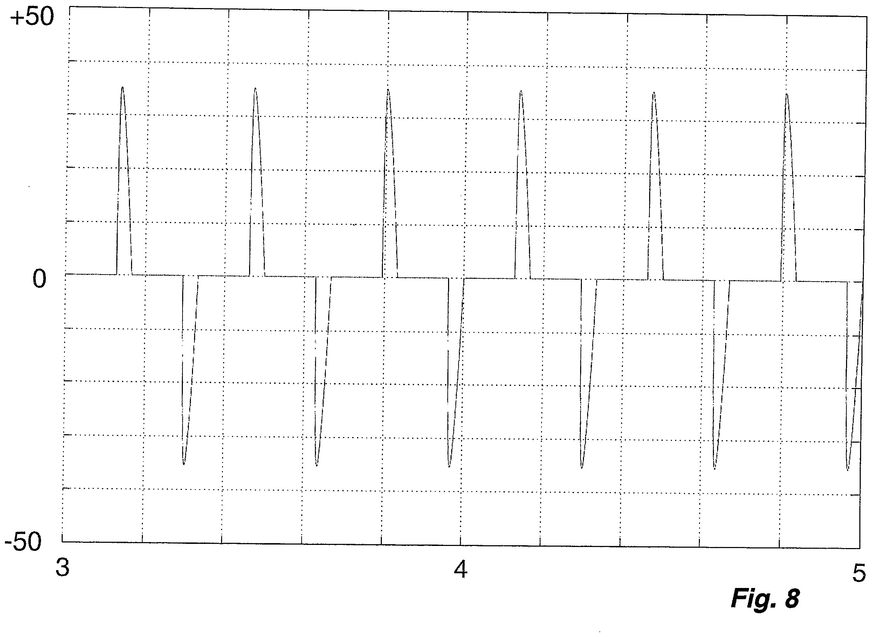

Fig. 8 zeigt eine vergleichbare Situation zu Fig. 6, wobei die Zeitabschnitte, in denen die erfindungsgemäße Verschiebung des Sternpunkt-Spannungspotentials erforderlich ist, kürzer sind, da die gesamte thermische Belastung geringer ist.

In den Maximalwertbildern 13, 14 wird somit die maximale thermische Belastung zu jedem Moment ermittelt, wobei in der beschriebenen Weise in dem Belastungs-Bestimmungsmittel 11 ein Stellwert DC_lim automatisch gebildet wird, welcher zur Erhöhung oder Verminderung der Einschaltdauern DC_U, DC_V und DC_W verwendet wird.

Die Ermittlung der maximalen thermischen Belastung geschieht hierbei über die Sperrschichttemperaturen TJ_up und TJ_low aus den zugehörigen Wicklungsströmen I_U, I_V bzw. I_W und den Einschaltdauern DC_U, DC_V und DC_W.

Wird beispielsweise bei einem stark thermisch belasteten Halbleiterschalter T1 die thermische Belastung verringert, indem die Einschaltdauer DC_U reduziert wird, so steigt die thermische Belastung des zugehörigen Halbleiterbauelements D2 an. Um dies zu begrenzen, sind die Prüfmittel 21, 24 in der beschriebenen Funktionsweise vorgesehen.

Die Prüfmittel 21, 24 bewirken, dass eine kleinste bzw. größte zulässige Einschaltdauer von 0,5 für den Halbleiterschalter mit der maximalen thermischen Belastung eingestellt werden kann.

Der Verstärker 17 kann hierbei so eingestellt sein, dass die Einschaltdauer DC_U, DC_V bzw. DC_W so geändert wird, dass die thermische Belastung auf einen Grenzwert fällt, welcher eine dauerfeste Arbeitsweise der Halbleiterschalter T1 bis T6 ermöglicht.

Da die Halbleiterschalter T1 bis T6 in an sich bekannter, hier nicht weiter dargestellter Weise auf einen Kühlkörper montiert sind, der im Normalbetrieb einen konstanten Temperaturwert hat, wird dieser Temperaturwert als Bezugspunkt gewählt.

Der Belastungs-Grenzwert 15 ist daher so festgelegt, dass die Summe aus der Betriebstemperatur des Kühlköpers und dem Belastungs-Grenzwert 15 eine maximal zulässige Sperrschichttemperatur der Halbleiterschalter T1 bis T6 nicht überschreitet.

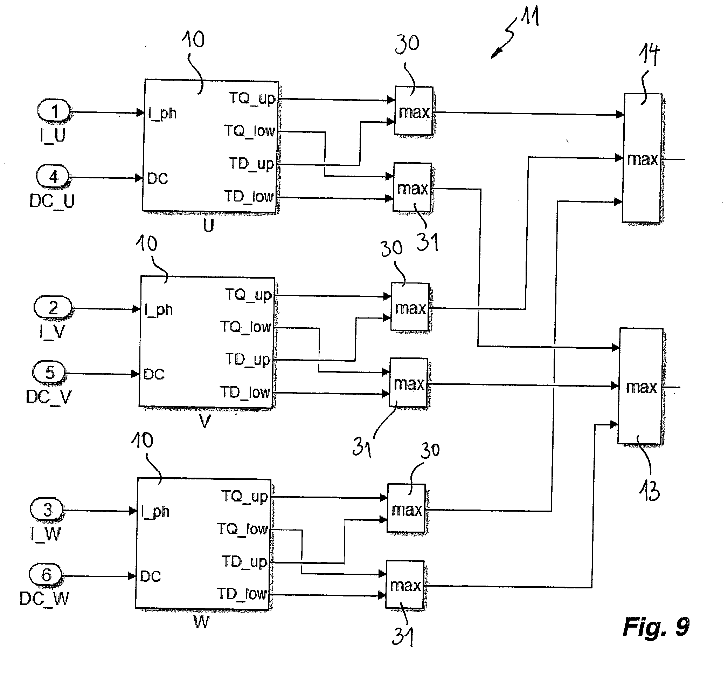

Figur 8 zeigt ein Blockschaltbild eines Belastungs-Bestimmungsmittels 11 eines weiteren erfindungsgemäßen Ausführungsbeispiel. Hierbei sind Bauteile und Funktionseinheiten, die funktional und/oder konstruktiv zu Bauteilen und Einzelheiten der Figuren 1 bis 7 gleichartig oder identisch sind, mit denselben Bezugszeichen bezeichnet und nicht noch einmal gesondert beschrieben. Die Ausführungen zu den Figuren 1 bis 7 gelten daher zu den Figuren 8 und 9 entsprechend.

Das Ausführungsbeispiel gemäß Figur 8 unterscheidet sich von dem Ausführungsbeispiel gemäß Figur 2 zunächst dadurch, dass die Sperrschichttemperaturen an den Halbleiterschaltern nun mit TQ_Up beziehungsweise TQ_low bezeichnet sind.

Zusätzlich sind die Sperrschichttemperatur-Bestimmungsmittel 10 zur Bestimmung der Sperrschichttemperaturen in den Halbleiterbauelementen D1, D2, D3, D4, D5, D6 eingerichtet. Aus dem Schaltplan der Leistungsendstufe 5 gemäß Figur 5, der auch bei dem vorliegenden Ausführungsbeispiel gilt, ist ersichtlich, dass jedem Halbleiterschalter T1, T2, T3, T4, T5, T6 ein Halbleiterbauelement D1, D2, D3, D4, D5, D6 zugeordnet ist, wobei dem Halbleiterschalter T1 beispielsweise das Halbleiterbauelement D2 als Freilaufdiode zugeordnet ist.

Die Sperrschichttemperaturen an den Halbleiterbauelementen D1, D2, D3, D4, D5, D6 sind mit TD_up und TD_low bezeichnet, wobei TD_up die Sperrschichttemperatur eines oberen Halbleiterbauelements D1, D3, D5 und TD_low die Sperrschichttemperatur eines unteren Halbleiterbauelements D2, D4, D6 bezeichnet.

In den Mittelwertbildern 30, 31 werden jeweils getrennt für die oberen Halbleiterschalter T1, T3, T5 und die oberen zugeordneten Halbleiterbauelemente D1, D3, D5 einerseits und die unteren Halbleiterschalter T2, T4, T6 und die unteren zugeordneten Halbleiterbauelemente D2, D4, D6 andererseits jeweils Maximalwerte ermittelt, die den bereits zu Figur 2 beschriebenen Maximalwertbildern 13, 14 zugeführt werden. Ab den Maximalwertbildern 13, 14 ist der Signalfluss wie zu Figur 2 beschrieben.

Ist beispielsweise die thermische Belastung an dem Halbleiterschalter T1 maximal, so wird dies über die Mittelwertbilder 30 und den Mittelwertbilder 14 weitergegeben. Zur thermischen Entlastung wird die Einschaltdauer der Halbbrücke 32 vermindert. Ist dagegen die thermische Belastung an dem Halbleiterbauelement D1 maximal, so bedeutet dies, dass die thermische Belastung an dem Halbleiterschalter T2, welchem das Halbleiterbauelement D1 zugeordnet ist, vergrößert werden muss, um die thermische Belastung an dem Halbleiterbauelement D1 zu verringern.

Wie bereits beschrieben bedeutet dies, dass die Einschaltdauer an der Halbbrücke 32 vermindert werden muss. Hierdurch wird ebenfalls der Halbleiterschalter T1 thermisch entlastet.

Die Zusammenführung der oberen Sperrschichttemperaturen einer Halbbrücke 32, 33, 34 zu einem Mittelwertbilder 30 und der unteren Sperrschichttemperaturen jeder Halbbrücke 32, 33, 34 zu einem Mittelwertbilder 31 ist daher möglich, weil die Maßnahmen zur thermischen Entlastung der oberen Halbleiterschalter und Halbleiterbauelemente einerseits und der unteren Halbleiterschalter und Halbleiterbauelement andererseits durch dieselbe Veränderung der Einschaltdauer der jeweiligen Halbbrücke 32, 33, 34 erreichbar ist.

Korrespondierend zu einer Veränderung der Einschaltdauer an der Halbbrücke 32 werden die Einschaltdauern an den Halbbrücken 33 und 34 derart verändert, dass sich für die veränderten Einschaltdauern dieselben Spannungsabfälle über den Motorwicklungen L1, L2 und L3 einstellen, so dass der jeweils in der Motorwicklung L1, L2 und L3 eingestellte Strom- oder Spannungsvektor unbeeinflusst von der thermischen Entlastung ist.

Figur 9 zeigt den Einfluss dieser Variante des erfindungsgemäßen Verfahrens auf den zeitlichen Verlauf der Einschaltdauer für eine Phase. Dargestellt ist die Einschaltdauer der betrachteten Halbbrücke, beispielsweise der Halbbrücke 32, in Abhängigkeit von der Zeit.

Die Kurve f zeigt hierbei den Verlauf, der sich mit der soeben beschriebenen Maximalwertbildung in den Maximalwertbildern 30, 31 ergibt. Die Kurve g zeigt dagegen den zu Figur 2 beschriebenen Fall einer Beschränkung der Einschaltdauer nach unten beziehungsweise nach oben durch den Wert 0,5.

Deutlich ist in Kurve g beispielsweise zur Zeit 3,3 der Einfluss der Begrenzung nach der Schaltung gemäß Figur 4 zu sehen. Die Deformationen jenseits der Durchgänge der Kurve f durch den Wert 0,5 stammen von den Begrenzungen in den anderen Phasen, also den anderen Halbbrücken 33, 34. Die Beeinflussung ergibt sich daraus, dass die Einschaltdauern der Haltbrücken 32, 33, 34 jeweils in gleicher Weise verändert werden, damit die Spannungsabfälle über den Wicklungen L1, L2 und L3 unverändert bleiben.

Es ist ersichtlich, dass die Einschaltdauern gemäß der Kurve f auch den in Figur 4 definierten Grenzwert von 0,5 unter- beziehungsweise überschreiten können. Die Schaltungsanordnung gemäß Figur 4 kann in diesem Fall komplett entfallen.

Bei einem Frequenzumrichter 4 wird vorgeschlagen, für die Halbleiterschalter T1, T2, T3, T4, T5, T6 ein maximale thermische Belastung wiederkehrend zu ermitteln, wobei eine Einschaltdauer und/oder ein Sternpunkt-Spannungspotential zumindest für denjenigen Halbleiterschalter T1, T2, T3, T4, T5, T6, für welchen die thermische Belastung maximal ist, derart verändert wird, dass die thermische Belastung für diesen Halbleiterschalter T1, T2, T3, T4, T5, T6 und/oder einem diesem zugeordneten Halbleiterbauelement D1, D2, D3, D4, D5, D6 verringert ist.

## Patentansprüche

1. Verfahren zur Ansteuerung eines Elektromotors (2), wobei Halbleiterschalter (T1, T2, T3, T4, T5, T6) in einer Zuleitung (3) des Elektromotors (2) derart geschaltet werden, dass sich im über die Zuleitung (3) bestromten Elektromotor (2) ein gewünschter Stromvektor einstellt, wobei zumindest dann, wenn eine maximale thermische Belastung der Halbleiterschalter (T1, T2, T3, T4, T5, T6) und/oder von den Halbleiterschaltern (T1, T2, T3, T4, T5, T6) zugeordneten Halbleiterelementen (D1, D2, D3, D4, D5, D6) einen Belastungs-Grenzwert (15) übersteigt, ein Spannungspotential durch Schaltung der Halbleiterschalter (T1, T2, T3, T4, T5, T6) derart verschoben wird, dass die maximale thermische Belastung verringert wird, und wobei die maximale thermische Belastung (TJ_up, TJ_low), mit einem Belastungs-Grenzwert (15) verglichen wird und in einem Sättigungsglied (16) jeweils negative Differenzen zwischen der maximalen thermischen Belastung und dem Belastungs-Grenzwert (15), die ein Unterschreiten des Belastungs-Grenzwerts (15) und somit eine unkritische maximale thermische Belastung anzeigen, abgeschnitten werden und somit in einer weiteren Bearbeitung ausblendbar sind und die maximale thermische Belastung (TJ_up, TJ-low) nur dann für die Verringerung der thermischen Belastung verwendet wird, wenn sie den oder einen Belastungs-Grenzwert (15) übersteigt.

2. Verfahren zur Ansteuerung eines Elektromotors (2) nach Anspruch 1, wobei Halbleiterschalter (T1, T2, T3, T4, T5, T6) in einer Zuleitung (3) des Elektromotors (2) derart geschaltet werden, dass sich im über die Zuleitung (3) bestromten Elektromotor (2) ein gewünschter Stromvektor einstellt, **dadurch gekennzeichnet, dass** zumindest dann, wenn eine maximale thermische Belastung der Halbleiterschalter (T1, T2, T3, T4, T5, T6) oder von den Halbleiterschaltern (T1, T2, T3, T4, T5, T6) zugeordneten Halbleiterelementen (D1, D2, D3, D4, D5, D6) einen Belastungs-Grenzwert (15) übersteigt, eine Einschaltdauer (DC_U, DC_V, DC_W) wenigstens eines Halbleiterschalters (T1, T2, T3, T4, T5, T6) der Halbleiterschalter (T1, T2, T3, T4, T5, T6) derart verändert wird, dass die maximale thermische Belastung verringert wird.

3. Verfahren nach Anspruch 1 oder 2, **dadurch gekennzeichnet, dass** die maximale thermische Belastung ermittelt wird und/oder dass zu der maximalen thermischen Belastung ein Stellwert (DC_lim) automatisch ermittelt wird, um welchen die oder eine Einschaltdauer (DC_U, DC_V, DC_W) des wenigstens einen oder eines Halbleiterschalters (T1, T2, T3, T4, T5, T6) vermindert oder erhöht wird, insbesondere wobei die Verminderung oder Erhöhung der Einschaltdauer einer oder jeder Halbbrücke darauf begrenzt wird, dass kein Halbleiterschalter (T1, T2, T3, T4, T5, T6) dauerhaft angesteuert wird, und/oder ein verfügbarer Wertebereich der Einschaltdauer (DC_U, DC_V, DC_W) zwischen 5% und 95%, bevorzugt zwischen 10% und 90%, liegt.

4. Verfahren nach einem der Ansprüche 1 bis 3, **dadurch gekennzeichnet, dass** zur Ermittlung der maximalen thermischen Belastung für die Halbleiterschalter (T1, T2, T3, T4, T5, T6) je eine Sperrschichttemperatur (TJ_up, TJ_low) ermittelt wird und/oder dass zur Ermittlung der maximalen thermischen Belastung für die Halbleiterschalter (T1, T2, T3, T4, T5, T6) je eine Einschaltdauer (DC_U, DC_V, DC_W) und/oder eine Stromstärke (I_U, I_V, I_W) bestimmt wird/werden.

5. Verfahren nach einem der Ansprüche 1 bis 4, **dadurch gekennzeichnet, dass** zur Verschiebung des oder eines Spannungspotentials die oder eine Einschaltdauer (DC_U, DC_V, DC_W) wenigstens eines Halbleiterschalters (T1, T2, T3, T4, T5, T6) der Halbleiterschalter (T1, T2, T3, T4, T5, T6) verändert, insbesondere für obere Halbleiterschalter (T1, T3, T5) verringert und/oder für untere Halbleiterschalter (T2, T4, T6) erhöht, wird.

6. Verfahren nach einem der Ansprüche 1 bis 5, **dadurch gekennzeichnet, dass** die oder eine Einschaltdauer (DC_U, DC_V, DC_W) für einen Halbleiterschalter (T1, T2, T3, T4, T5, T6) verringert oder erhöht wird, an welchem die maximale thermische Belastung auftritt.

7. Verfahren nach einem der Ansprüche 1 bis 6, **dadurch gekennzeichnet, dass** das oder ein Spannungspotential so verschoben und/oder die oder eine Einschaltdauer (DC_U, DC_V, DC_W) so verändert wird, dass eine thermische Belastung eines zugeordneten Halbleiterbaulements (D1, D2, D3, D4, D5, D6), das mit dem oder einem Halbleiterschalter (T1, T2, T3, T4, T5, T6) mit der maximalen thermischen Belastung zusammenwirkt, unterhalb eines zweiten Belastungs-Grenzwerts bleibt.

8. Verfahren nach einem der Ansprüche 1 bis 7, **dadurch gekennzeichnet, dass** ein Bereich, über welchen das oder ein Spannungspotential verschiebbar und/oder die oder eine Einschaltdauer (DC_U, DC_V, DC_W) veränderbar ist, dadurch begrenzt wird, dass eine kleinste oder größte zulässige Einschaltdauer (DC_U, DC_V, DC_W) für wenigstens einen Halbleiterschalter (T1, T2, T3, T4, T5, T6) vorgegeben ist.

9. Verfahren nach einem der Ansprüche 1 bis 8, **dadurch gekennzeichnet, dass** zur Ermittlung der maximalen thermischen Belastung ein Maximum einer thermischen Belastung des Halbleiterschalters (T1, T2, T3, T4, T5, T6) und einer thermischen Belastung des zugeordneten Halbleiterbauelements (D1, D2, D3, D4, D5, D6) gebildet wird und/oder dass zur Ermittlung der maximalen thermischen Belastung ein Maximum von thermischen Belastungen zu einzelnen Phasen und/oder Halbbrücken (32, 33, 34) gebildet wird.

10. Verfahren nach einem der Ansprüche 1 bis 9, **dadurch gekennzeichnet, dass** das oder ein Spannungspotential so verschoben und/oder eine Einschaltdauer (DC_U, DC_V, DC_W) so verändert wird, dass eine thermische Belastung des Halbleiterschalters (T1, T2, T3, T4, T5, T6) mit der maximalen thermischen Belastung auf den oder einen Belastungs-Grenzwert (15) fällt, und/oder dass der Belastungs-Grenzwert (15) durch eine Differenz zwischen einer maximal zulässigen Sperrschichttemperatur und einer Betriebstemperatur eines die Halbleiterschalter (T1, T2, T3, T4, T5, T6) kühlenden Kühlkörpers gegeben ist.

11. Verfahren nach einem der Ansprüche 1 bis 10, **dadurch gekennzeichnet, dass** die maximale thermische Belastung (TJ_up, TJ_low) an oberen Halbleiterschaltern (T1, T3, T5) und/oder unteren Halbleiterschaltern (T2, T4, T6) mit einem Belastungs-Grenzwert (15) verglichen wird.

12. Verfahren nach einem der Ansprüche 1 bis 11, **dadurch gekennzeichnet, dass** eine Differenz zwischen einem einen Belastungs-Grenzwert (15) übersteigenden Anteil einer an oberen Halbleiterschaltern (T1, T3, T5) vorliegenden maximalen thermischen Belastung einerseits und einem den oder einen Belastungs-Grenzwert (15) übersteigenden Anteil einer an unteren Halbleiterschaltern (T2, T4, T6) vorliegenden maximalen thermischen Belastung andererseits gebildet wird.

13. Verfahren nach einem der Ansprüche 1 bis 12, **dadurch gekennzeichnet, dass** die Ansteuerung der Halbleiterschalter (T1, T2, T3, T4, T5, T6) so gewählt wird, dass eine paarweise Spannungsdifferenz zwischen den einzelnen Phasen und/oder ein Motorstrom (I_U, I_V, I_W) in den einzelnen Phasen jeweils unverändert bleibt/bleibt.

14. Frequenzumrichter (4) mit einer Leistungsendstufe (5) mit Halbleiterschaltern (T1, T2, T3, T4, T5, T6) und einer Ansteuerungselektronik (8) zur Schaltung der Halbleiterschalter (T1, T2, T3, T4, T5, T6), **dadurch gekennzeichnet, dass** die Ansteuerungselektronik (8) zur Ausführung eines Verfahrens nach einem der vorangehenden Ansprüche eingerichtet ist.

15. Frequenzumrichter (4) nach Anspruch 14, **dadurch gekennzeichnet, dass** die Ansteuerungselektronik (8) Verschiebemittel (28) zum einstellbaren Verschieben des oder eines Spannungspotentials aufweist und/oder dass die Ansteuerungselektronik (8) wenigstens einen Differenzbilder (35) zum Vergleich einer maximalen thermischen Belastung mit einem Belastungs-Grenzwert (15) und/oder mindestens ein Sättigungsglied (16) aufweist.

16. Frequenzumrichter (4) nach Anspruch 14 oder 15, **dadurch gekennzeichnet, dass** die Ansteuerungselektronik (8) Belastungs-Bestimmungsmittel (11) zur Ermittlung der oder einer thermischen Belastung für jeden Halbleiterschalter (T1, T2, T3, T4, T5, T6) aufweist.

17. Frequenzumrichter (4) nach einem der Ansprüche 14 bis 16, **dadurch gekennzeichnet, dass** die Ansteuerungselektronik (8) Sperrschichttemperatur-Bestimmungsmittel (10) zur Ermittlung der oder einer Sperrschichttemperatur (TJ_up, TJ_low) wenigstens eines Halbleiterschalter (T1, T2, T3, T4, T5, T6) aufweist.

18. Frequenzumrichter (4) nach einem der Ansprüche 14 bis 17, **dadurch gekennzeichnet, dass** die Ansteuerungselektronik (8) zur Veränderung einer Einschaltdauer (DC_U, DC_V, DC_W) für wenigstens einen oder jeden Halbleiterschalter (T1, T2, T3, T4, T5, T6) eingerichtet ist, insbesondere derart, dass eine paarweise Spannungsdifferenz zwischen den einzelnen Phasen und/oder ein Motorstrom (I_U, I_V, I_W) in den einzelnen Phasen jeweils unverändert bleibt/bleiben, und/oder dass die Ansteuerungselektronik (8) Prüfmittel (21, 24) zu einer Prüfung, ob eine Einschaltdauer (DC_U, DC_V, DC_W) kleiner oder größer als ein Vorgabewert (29) ist, aufweist.

19. Umrichtermotor (1) mit einem Elektromotor (2) und einem diesen ansteuernden Frequenzumrichter (4), **dadurch gekennzeichnet, dass** der Frequenzumrichter (4) nach einem der Ansprüche 14 bis 18 ausgebildet ist.

## Claims

1. Method for actuating an electric motor (2), wherein semiconductor switches (T1, T2, T3, T4, T5, T6) are connected in a feed line (3) of the electric motor (2) in such a way that a desired current vector is produced in the electric motor (2) that is energized by means of the feed line (3), wherein, at least when a maximum thermal loading of the semiconductor switches (T1, T2, T3, T4, T5, T6) and/or of semiconductor elements (D1, D2, D3, D4, D5, D6) associated with the semiconductor switches (T1, T2, T3, T4, T5, T6) exceeds a loading limit value (15), a voltage potential is shifted in such a way by connecting the semiconductor switches (T1, T2, T3, T4, T5, T6) that the maximum thermal loading is reduced, and wherein the maximum thermal loading (TJ_up, TJ_low) is compared with a loading limit value (15) and respective negative differences between the maximum thermal loading and the loading limit value (15) that indicate an undershooting of the loading limit value (15) and therefore an uncritical maximum thermal loading are cut off in a saturation element (16) and therefore able to be blocked out in a further processing operation and the maximum thermal loading (TJ_up, TJ_low) is used for reducing the thermal loading only when it exceeds the or a loading limit value (15).

2. Method for actuating an electric motor (2) according to Claim 1, wherein semiconductor switches (T1, T2, T3, T4, T5, T6) are connected in a feed line (3) of the electric motor (2) in such a way that a desired current vector is produced in the electric motor (2) that is energized by means of the feed line (3), **characterized in that**, at least when a maximum thermal loading of the semiconductor switches (T1, T2, T3, T4, T5, T6) or of semiconductor elements (D1, D2, D3, D4, D5, D6) associated with the semiconductor switches (T1, T2, T3, T4, T5, T6) exceeds a loading limit value (15), a switch-on period (DC_U, DC_V, DC_W) of at least one semiconductor switch (T1, T2, T3, T4, T5, T6) of the semiconductor switches (T1, T2, T3, T4, T5, T6) is changed in such a way that the maximum thermal loading is reduced.

3. Method according to Claim 1 or 2, **characterized in that** the maximum thermal loading is ascertained and/or in that a manipulated value (DC_lim) is automatically ascertained at the maximum thermal loading, the or a switch-on period (DC_U, DC_V, DC_W) of the at least one or of a semiconductor switch (T1, T2, T3, T4, T5, T6) being reduced or increased by said manipulated value, in particular wherein the reduction or increase in the switch-on period of a or each half-bridge is limited so that no semiconductor switch (T1, T2, T3, T4, T5, T6) is actuated permanently, and/or an available value range of the switch-on period (DC_U, DC_V, DC_W) is between 5% and 95%, preferably between 10% and 90%.

4. Method according to one of Claims 1 to 3, **characterized in that**, to ascertain the maximum thermal loading for the semiconductor switches (T1, T2, T3, T4, T5, T6), in each case one junction temperature (TJ_up, TJ_low) is ascertained and/or **in that**, to ascertain the maximum thermal loading for the semiconductor switches (T1, T2, T3, T4, T5, T6), in each case one switch-on period (DC_U, DC_V, DC_W) and/or one current intensity (I_U, I_V, I_W) is/are determined.

5. Method according to one of Claims 1 to 4, **characterized in that**, to shift the or a voltage potential, the or a switch-on period (DC_U, DC_V, DC_W) of at least one semiconductor switch (T1, T2, T3, T4, T5, T6) of the semiconductor switches (T1, T2, T3, T4, T5, T6) changes, in particular is reduced for upper semiconductor switches (T1, T3, T5) and/or is increased for lower semiconductor switches (T2, T4, T6).

6. Method according to one of Claims 1 to 5, **characterized in that** the or a switch-on period (DC_U, DC_V, DC_W) is reduced or increased for a semiconductor switch (T1, T2, T3, T4, T5, T6) at which the maximum thermal loading occurs.

7. Method according to one of Claims 1 to 6, **characterized in that** the or a voltage potential is shifted and/or the or a switch-on period (DC_U, DC_V, DC_W) is changed in such a way that a thermal loading of an associated semiconductor component (D1, D2, D3, D4, D5, D6), which interacts with the or a semiconductor switch (T1, T2, T3, T4, T5, T6) with the maximum thermal loading, remains below a second loading limit value.

8. Method according to one of Claims 1 to 7, **characterized in that** a range over which the or a voltage potential is able to be shifted and/or the or a switch-on period (DC_U, DC_V, DC_W) is able to be changed is limited by virtue of the fact that a smallest or greatest permissible switch-on period (DC_U, DC_V, DC_W) is prescribed for at least one semiconductor switch (T1, T2, T3, T4, T5, T6).

9. Method according to one of Claims 1 to 8, **characterized in that**, to ascertain the maximum thermal loading, a maximum of a thermal loading of the semiconductor switch (T1, T2, T3, T4, T5, T6) and a thermal loading of the associated semiconductor component (D1, D2, D3, D4, D5, D6) is formed and/or **in that**, to ascertain the maximum thermal loading, a maximum of thermal loadings at individual phases and/or half-bridges (32, 33, 34) is formed.

10. Method according to one of Claims 1 to 9, **characterized in that** the or a voltage potential is shifted and/or a switch-on period (DC_U DC_V, DC_W) is changed such that a thermal loading of the semiconductor switch (T1, T2, T3, T4, T5, T6) with the maximum thermal loading decreases to the or a loading limit value (15), and/or **in that** the loading limit value (15) is given by a difference between a maximum permissible junction temperature and an operating temperature of a cooling body that cools the semiconductor switches (T1, T2, T3, T4, T5, T6).

11. Method according to one of Claims 1 to 10, **characterized in that** the maximum thermal loading (TJ_up, TJ_low) at upper semiconductor switches (T1, T3, T5) and/or lower semiconductor switches (T2, T4, T6) is compared with a loading limit value (15).

12. Method according to one of Claims 1 to 11, **characterized in that** a difference between a proportion of a maximum thermal loading present at upper semiconductor switches (T1, T3, T5) that exceeds a loading limit value (15) on the one hand and a proportion of a maximum thermal loading present at lower semiconductor switches (T2, T4, T6) that exceeds the or a loading limit value (15) on the other hand is formed.

13. Method according to one of Claims 1 to 12, **characterized in that** the actuation of the semiconductor switches (T1, T2, T3, T4, T5, T6) is selected so that a paired voltage difference between the individual phases and/or a motor current (I_U, I_V, I_W) in the individual phases in each case remains/remain unchanged.

14. Frequency converter (4) having a power end stage (5) having semiconductor switches (T1, T2, T3, T4, T5, T6) and an actuation electronics system (8) for connecting the semiconductor switches (T1, T2, T3, T4, T5, T6), **characterized in that** the actuation electronics system (8) is configured to execute a method according to one of the preceding claims.

15. Frequency converter (4) according to Claim 14, **characterized in that** the actuation electronics system (8) has shifting means (28) for adjustably shifting the or a voltage potential and/or **in that** the actuation electronics system (8) has at least one subtractor (35) for comparing a maximum thermal loading with a loading limit value (15) and/or at least one saturation element (16) .

16. Frequency converter (4) according to Claim 14 or 15, **characterized in that** the actuation electronics system (8) has loading determination means (11) for ascertaining the or a thermal loading for each semiconductor switch (T1, T2, T3, T4, T5, T6).

17. Frequency converter (4) according to one of Claims 14 to 16, **characterized in that** the actuation electronics system (8) has junction temperature determination means (10) for ascertaining the or a junction temperature (TJ_up, TJ_low) of at least one semiconductor switch (T1, T2, T3, T4, T5, T6).

18. Frequency converter (4) according to one of Claims 14 to 17, **characterized in that** the actuation electronics system (8) is configured to change a switch-on period (DC_U, DC_V, DC_W) for at least one or each semiconductor switch (T1, T2, T3, T4, T5, T6), in particular in such a way that a paired voltage difference between the individual phases and/or a motor current (I_U, I_V, I_W) in the individual phases in each case remains/remain unchanged, and/or **in that** the actuation electronics system (8) has checking means (21, 24) for checking whether a switch-on period (DC_U, DC_V, DC_W) is smaller or greater than a prescribed value (29).

19. Converter motor (1) having an electric motor (2) and a frequency converter (4) that actuates said electric motor, **characterized in that** the frequency converter (4) is formed according to one of Claims 14 to 18.

## Revendications

1. Procédé de commande d'un moteur électrique (2), dans lequel des commutateurs à semi-conducteur (T1, T2, T3, T4, T5, T6) sont montés dans une ligne d'alimentation (3) du moteur électrique (2), de telle manière qu'il s'établisse dans le moteur électrique (2) alimenté par la ligne d'alimentation (3) un vecteur de courant désiré, dans lequel, au moins lorsqu'une charge thermique maximale des commutateurs à semi-conducteur (T1, T2, T3, T4, T5, T6) et/ou d'éléments semi-conducteurs (D1, D2, D3, D4, D5, D6) associés aux commutateurs à semi-conducteur (T1, T2, T3, T4, T5, T6) dépasse une valeur limite de charge (15), un potentiel de tension est déplacé par connexion des commutateurs à semi-conducteur (T1, T2, T3, T4, T5, T6) de telle manière que la charge thermique maximale soit réduite, et dans lequel la charge thermique maximale (TJ_up, TJ_low) est comparée à une valeur limite de charge (15) et chaque fois des différences négatives entre la charge thermique maximale et la valeur limite de charge (15), qui indiquent un franchissement vers le bas de la valeur limite de charge (15) et dès lors une charge thermique maximale non critique, sont coupées dans un organe de saturation (16) et peuvent ainsi être atténuées dans un autre traitement et la charge thermique maximale (TJ_up, TJ_low) n'est utilisée pour la réduction de la charge thermique que lorsqu'elle dépasse la ou une valeur limite de charge (15).

2. Procédé de commande d'un moteur électrique (2) selon la revendication 1, dans lequel des commutateurs à semi-conducteur (T1, T2, T3, T4, T5, T6) sont montés dans une ligne d'alimentation (3) du moteur électrique (2) de telle manière qu'il s'établisse dans le moteur électrique (2) alimenté par la ligne d'alimentation (3) un vecteur de courant désiré, **caractérisé en ce qu'**au moins lorsqu'une charge thermique maximale des commutateurs à semi-conducteur (T1, T2, T3, T4, T5, T6) ou d'éléments semi-conducteurs (D1, D2, D3, D4, D5, D6) associés aux commutateurs à semi-conducteur (T1, T2, T3, T4, T5, T6) dépasse une valeur limite de charge (15), on fait varier une durée de connexion (DC_U, DC_V, DC_W) d'au moins un commutateur à semi-conducteur (T1, T2, T3, T4, T5, T6) des commutateurs à semi-conducteur (T1, T2, T3, T4, T5, T6) de telle manière que la charge thermique maximale soit réduite.

3. Procédé selon une revendication 1 ou 2, **caractérisé en ce que** l'on détermine la charge thermique maximale et/ou **en ce que** l'on détermine automatiquement une valeur de consigne (DC_lim) pour la charge thermique maximale, autour de laquelle la ou une durée de connexion (DC_U, DC_V, DC_W) dudit au moins un ou d'un commutateur à semi-conducteur (T1, T2, T3, T4, T5, T6) est réduite ou augmentée, en particulier dans lequel la réduction ou l'augmentation de la durée de connexion d'un ou de chaque demi-pont est limitée à celle-ci, **en ce qu'**aucun commutateur à semi-conducteur (T1, T2, T3, T4, T5, T6) n'est commandé de façon permanente et/ou une plage de valeurs disponible des durées de connexion (DC_U, DC_V, DC_W) se situe entre 5 % et 95 %, de préférence entre 10 % et 90 %.

4. Procédé selon l'une quelconque des revendications 1 à 3, **caractérisé en ce que** pour la détermination de la charge thermique maximale pour les commutateurs à semi-conducteur (T1, T2, T3, T4, T5, T6) on détermine chaque fois une température de couche d'arrêt (TJ_up, TJ_low) et/ou **en ce que** pour la détermination de la charge thermique maximale pour les commutateurs à semi-conducteur (T1, T2, T3, T4, T5, T6) on détermine chaque fois une durée de connexion (DC_U, DC_V, DC_W) et/ou une intensité de courant (I_U, I_V, I_W).

5. Procédé selon l'une quelconque des revendications 1 à 4, **caractérisé en ce que** pour le déplacement du ou d'un potentiel de tension, on fait varier la ou une durée de connexion (DC_U, DC_V, DC_W) d'au moins un commutateur à semi-conducteur (T1, T2, T3, T4, T5, T6) des commutateurs à semi-conducteur (T1, T2, T3, T4, T5, T6), en particulier on la réduit pour des commutateurs à semi-conducteur supérieurs (T1, T3, T5) et/ou on l'augmente pour des commutateurs à semi-conducteur inférieurs (T2, T4, T6).

6. Procédé selon l'une quelconque des revendications 1 à 5, **caractérisé en ce que** l'on réduit ou on augmente la ou une durée de connexion (DC_U, DC_V, DC_W) pour un commutateur à semi-conducteur (T1, T2, T3, T4, T5, T6), auquel la charge thermique maximale se produit.

7. Procédé selon l'une quelconque des revendications 1 à 6, **caractérisé en ce que** l'on déplace le ou un potentiel de tension et/ou on fait varier la ou une durée de connexion (DC_U, DC_V, DC_W) de telle manière qu'une charge thermique d'un composant semi-conducteur associé (D1, D2, D3, D4, D5, D6), qui coopère avec le ou un commutateur à semi-conducteur (T1, T2, T3, T4, T5, T6) avec la charge thermique maximale, reste en dessous d'une deuxième valeur limite de charge.

8. Procédé selon l'une quelconque des revendications 1 à 7, **caractérisé en ce qu'**une plage, sur laquelle le ou un potentiel de tension est déplaçable et/ou la ou une durée de connexion (DC_U, DC_V, DC_W) est variable, est limitée de telle manière que la plus petite ou la plus grande durée de connexion admissible (DC_U, DC_V, DC_W) pour au moins un commutateur à semi-conducteur (T1, T2, T3, T4, T5, T6) soit prédéterminée.

9. Procédé selon l'une quelconque des revendications 1 à 8, **caractérisé en ce que** pour la détermination de la charge thermique maximale, on forme un maximum d'une charge thermique du commutateur à semi-conducteur (T1, T2, T3, T4, T5, T6) et d'une charge thermique du composant semi-conducteur associé (D1, D2, D3, D4, D5, D6) et/ou **en ce que** pour la détermination de la charge thermique maximale on forme un maximum de charges thermiques à des phases individuelles et/ou à des demi-ponts individuels (32, 33, 34).

10. Procédé selon l'une quelconque des revendications 1 à 9, **caractérisé en ce que** l'on déplace le ou un potentiel de tension et/ou on fait varier une durée de connexion (DC_U, DC_V, DC_W) de telle manière qu'une charge thermique du commutateur à semi-conducteur (T1, T2, T3, T4, T5, T6) avec la charge thermique maximale tombe sur la ou une valeur limite de charge (15), et/ou **en ce que** la valeur limite de charge (15) est donnée par une différence entre une température de couche d'arrêt maximale admissible et une température de fonctionnement d'un corps de refroidissement refroidissant les commutateurs à semi-conducteur (T1, T2, T3, T4, T5, T6).

11. Procédé selon l'une quelconque des revendications 1 à 10, **caractérisé en ce que** l'on compare la charge thermique maximale (TJ_up, TJ_low) à des commutateurs à semi-conducteur supérieurs (T1, T3, T5) et/ou à des commutateurs à semi-conducteur inférieurs (T2, T4, T6) avec une valeur limite de charge (15).

12. Procédé selon l'une quelconque des revendications 1 à 11, **caractérisé en ce que** l'on forme une différence entre une partie d'une charge thermique maximale présente à des commutateurs à semi-conducteur supérieurs (T1, T3, T5) dépassant une valeur limite de charge (15) d'une part et une part d'une charge thermique maximale présente à des commutateurs à semi-conducteur inférieurs (T2, T4, T6) dépassant la ou une valeur limite de charge (15) d'autre part.

13. Procédé selon l'une quelconque des revendications 1 à 12, **caractérisé en ce que** l'on choisit la commande des commutateurs à semi-conducteur (T1, T2, T3, T4, T5, T6) de telle manière qu'une différence de tension par paire entre les phases individuelles et/ou un courant de moteur (I_U, I_V, I_W) dans les phases individuelles reste chaque fois inchangée.

14. Convertisseur de fréquence (4) avec un étage final de puissance (5) avec des commutateurs à semi-conducteur (T1, T2, T3, T4, T5, T6) et une électronique de commande (8) pour la connexion des commutateurs à semi-conducteur (T1, T2, T3, T4, T5, T6), **caractérisé en ce que** l'électronique de commande (8) est configurée de façon à exécuter un procédé selon l'une quelconque des revendications précédentes.

15. Convertisseur de fréquence (4) selon la revendication 14, **caractérisé en ce que** l'électronique de commande (8) présente des moyens de déplacement (28) pour le déplacement réglable du ou d'un potentiel de tension et/ou **en ce que** l'électronique de commande (8) présente au moins un formateur de différence (35) pour la comparaison d'une charge thermique maximale avec une valeur limite de charge (15) et/ou au moins un organe de saturation (16).

16. Convertisseur de fréquence (4) selon une revendication 14 ou 15, **caractérisé en ce que** l'électronique de commande (8) présente des moyens de détermination de charge (11) pour la détermination de la ou d'une charge thermique pour chaque commutateur à semi-conducteur (T1, T2, T3, T4, T5, T6).

17. Convertisseur de fréquence (4) selon l'une quelconque des revendications 14 à 16, **caractérisé en ce que** l'électronique de commande (8) présente des moyens de détermination de température de couche d'arrêt (10) pour la détermination de la ou d'une température de couche arrêt (TJ_up, TJ_low) d'au moins un commutateur à semi-conducteur (T1, T2, T3, T4, T5, T6).

18. Convertisseur de fréquence (4) selon l'une quelconque des revendications 14 à 17, **caractérisé en ce que** l'électronique de commande (8) est conçue pour faire varier une durée de connexion (DC_U, DC_V, DC_W) pour au moins un ou chaque commutateur à semi-conducteur (T1, T2, T3, T4, T5, T6), en particulier de telle manière qu'une différence de tension par paire entre les phases individuelles et/ou un courant de moteur (I_U, I_V, I_W) dans les phases individuelles reste chaque fois inchangée, et/ou **en ce que** l'électronique de commande (8) présente des moyens de contrôle (21, 24) pour contrôler si une durée de connexion (DC_U, DC_V, DC_W) est inférieure ou supérieure à une valeur prédéfinie (29).

19. Moteur à convertisseur (1) avec un moteur électrique (2) et un convertisseur de fréquence (4) commandant ce dernier, **caractérisé en ce que** le convertisseur de fréquence (4) est réalisé selon l'une quelconque des revendications 14 à 18.
